(19) Europäisches Patentamt
European Patent Office
Office européen des brevets

(11) **EP 2 487 908 A1**

(12) **EUROPEAN PATENT APPLICATION**
published in accordance with Art. 153(4) EPC


(43) Date of publication:
**15.08.2012 Bulletin 2012/33**

(21) Application number: **10824572.1**

(22) Date of filing: **24.02.2010**

(51) Int Cl.:
***H04N 7/18*** *(2006.01)* ***B60R 1/00*** *(2006.01)*
***G06T 1/00*** *(2006.01)*

(86) International application number:
**PCT/JP2010/001248**

(87) International publication number:
**WO 2011/048716 (28.04.2011 Gazette 2011/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.10.2009 JP 2009242191**



(71) Applicant: **Panasonic Corporation**
**Kadoma-shi**
**Osaka 571-8501 (JP)**

(72) Inventors:
- **MURAMATSU, Hirokazu**
  **Osaka-shi, Osaka 540-6207 (JP)**
- **TOYODA, Keiji**
  **Osaka-shi, Osaka 540-6207 (JP)**

(74) Representative: **Kügele, Bernhard et al**
**Novagraaf International SA**
**Chemin de l'Echo 3**
**1213 Onex (CH)**


# (54) VIDEO IMAGE CONVERSION DEVICE AND IMAGE CAPTURE DEVICE


(57) An image capture device (100) that converts the viewpoint of an input video image includes: a viewpoint parameter storage unit (30) for storing viewpoint parameters corresponding to respective viewpoints, the viewpoint parameters being for changing the viewpoint of a video image; a viewpoint selecting unit (501) that selects the viewpoint parameter of a desired start viewpoint and the viewpoint parameter of a desired end viewpoint from the viewpoint parameters stored in the viewpoint parameter storage unit (30); a viewpoint parameter interpolating unit (502) that generates an interpolated viewpoint parameter by interpolating the viewpoint parameter of the start viewpoint and the viewpoint parameter of the end viewpoint selected by the viewpoint selecting unit; and a viewpoint conversion unit (503) that generates and outputs a viewpoint-converted video image by sequentially performing a viewpoint conversion on the input video image, based on the interpolated viewpoint parameter sequentially generated by the viewpoint parameter interpolating unit (502), the viewpoint conversion unit thereby presenting the viewpoint-converted video image in which the viewpoint is gradually switched between the start viewpoint and the end viewpoint. With this structure, smooth viewpoint switching can be performed, without an increase in storage capacity.


FIG.1

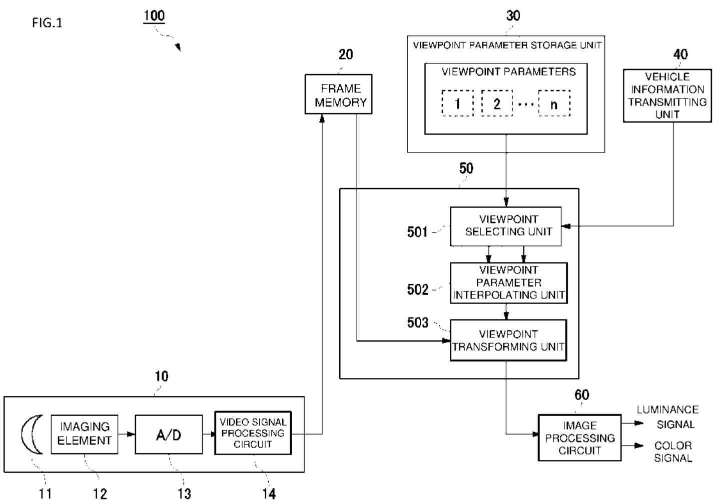


EP 2 487 908 A1

## Description

CROSS REFERENCE TO RELATED APPLICATIONS

This application claims benefit of priority to Japanese Patent Application No. 2009-242191, filed on October 21, 2009, the contents of which are incorporated by reference herein.

TECHNICAL FIELD

The present invention relates to a video image conversion device that converts an input video image into a video image of a desired viewpoint, and an image capture device including the video image conversion device.

BACKGROUND ART

In recent years, vehicle-mounted cameras to capture images of surrounding areas of vehicles have been widely used. To aid safe driving of an automobile, a vehicle-mounted camera captures images of areas that cannot be seen from the driver. Video images captured by the camera are displayed on a monitor in the vehicle, so that the driver can drive the vehicle while checking the surroundings of the vehicle. A viewpoint conversion is performed on a video image input from the camera, to generate a video image of the vehicle surrounding area seen from a desired viewpoint. Also, a video image of a viewpoint required by the driver in each driving situation is presented to the driver each time.

In a conventional video image presenting device for vehicles, a video image from more than one viewpoint is generated by modifying and combining video images input from more than one camera, in accordance with driving situations such as backward parking, forward parking, and entering an intersection (see Patent Document 1, for example). In this manner, a suitably combined video image required by the driver is presented in each driving situation. In the video image presenting device, a look-up table is used for combining video images, and look-up tables are switched in accordance with viewpoints. Each driving situation is identified through a switch selecting operation performed by the driver.

[Citation List]

[Patent Document]

[Patent Document 1] Japanese Patent Application Laid-Open No. H11-078692

DISCLOSURE OF THE INVENTION

PROBLEMS TO BE SOLVED BY THE INVENTION

In the conventional video image presenting device, however, viewpoints are instantly switched when the viewpoint of the video image being presented is changed. Therefore, the driver often fails to follow which surrounding area of the vehicle is being shown in the video image, and is confused. Furthermore, since each driving situation is identified by a switch selecting operation performed by the driver, the driver needs to perform an operation other than the driving. This results in a hindrance to safe driving.

The present invention has been made to solve the problems of the conventional art, and the object thereof is to provide a video image conversion device and an image capture device that can make the driver aware of movement of the viewpoint by smoothly changing the viewpoint of a video image. Another object of the present invention is to provide a video image conversion device and an image capture device that can automatically change the viewpoint of a video image to an optimum point, without causing any trouble to the driver.

MEANS FOR SOLVING THE PROBLEMS

An aspect of the present invention is a video image conversion device that converts a viewpoint of an input video image. This video image conversion device includes: a viewpoint selecting unit that selects a viewpoint parameter for changing the viewpoint of the input video image to a start viewpoint, and a viewpoint parameter for changing the viewpoint of the input video image to an end viewpoint, the viewpoint parameters being selected from a plurality of viewpoint parameters corresponding to a plurality of viewpoints, the plurality of viewpoint parameters being stored beforehand and being for changing a viewpoint of a video image; a viewpoint parameter interpolating unit that generates an interpolated viewpoint parameter by interpolating the viewpoint parameter of the start viewpoint and the viewpoint parameter of the end viewpoint selected by the viewpoint selecting unit; and a viewpoint conversion unit that generates a viewpoint-converted video image by performing a viewpoint conversion on the input video image, based on the interpolated viewpoint parameter generated by the viewpoint parameter interpolating unit, the viewpoint conversion unit presenting the viewpoint-converted video image in which the viewpoint is gradually switched between the start viewpoint and the end viewpoint.

Another aspect of the present invention is an image capture device. This image capture device includes: an input video image generating device that generates an input video image by capturing an image of the surrounding area of a vehicle with a camera; and the above-described video image conversion device.

Yet another aspect of the present invention is a video image conversion program for causing a computer to perform an operation to convert the viewpoint of an input video image. This video image conversion program causes the computer to: select the viewpoint parameter of a start viewpoint and the viewpoint parameter of an end viewpoint from viewpoint parameters corresponding to viewpoints, the viewpoint parameters being stored beforehand and being for changing the viewpoint of a video image; and generate an interpolated viewpoint parameter by interpolating the selected viewpoint parameter of the start viewpoint and the selected viewpoint parameter of the end viewpoint, and generate and output a viewpoint-converted video image by performing a viewpoint conversion on the input video image, based on the interpolated viewpoint parameter, the viewpoint conversion providing the viewpoint-converted video image in which the viewpoint is gradually switched between the start viewpoint and the end viewpoint.

Still another aspect of the present invention is a computer-readable recording medium that records the above-described video image conversion program.

Yet another aspect of the present invention is a video image conversion method for converting the viewpoint of an input video image. This video image conversion method includes: selecting the viewpoint parameter for changing the viewpoint of the input video image to a start viewpoint and the viewpoint parameter for changing the viewpoint of the input video image to an end viewpoint, the viewpoint parameters being selected from viewpoint parameters corresponding to viewpoints, the viewpoint parameters being stored beforehand and being for changing the viewpoint of a video image; and generating an interpolated viewpoint parameter by interpolating the selected viewpoint parameter of the start viewpoint and the selected viewpoint parameter of the end viewpoint, and generating and outputting a viewpoint-converted video image by performing a viewpoint conversion on the input video image, based on the interpolated viewpoint parameter, the viewpoint conversion providing the viewpoint-converted video image in which the viewpoint is gradually switched between the start viewpoint and the end viewpoint.

As will be described later, the present invention has other aspects. Therefore, this disclosure of the invention is made to disclose only some aspects of the present invention, and does not limit the scope of the invention claimed herein.

## ADVANTAGES OF THE INVENTION

According to the present invention, smooth viewpoint switching can be performed. Accordingly, a video image that appears to be being captured with a moving camera can be presented to the driver, and the driver can correctly recognize the viewpoint of the video image.

## BRIEF DESCRIPTION OF THE DRAWINGS

Fig. 1 is a block diagram schematically showing the structure of a video image conversion device in a first embodiment of the present invention.

Fig. 2(a) is a diagram showing an original video image.

Fig. 2(b) is a diagram showing a viewpoint-converted video image.

Fig. 2(c) is a diagram showing a coordinate table.

Fig. 3 is a diagram showing an example of the correspondence relationship between the vehicle information and the viewpoints of video images to be presented.

Fig. 4(a) shows the coordinate table corresponding to a start viewpoint.

Fig. 4(b) shows the coordinate table corresponding to an end viewpoint.

Fig. 4(c) shows an interpolation coordinate table corresponding to a viewpoint existing between the start viewpoint and the end viewpoint.

Fig. 4(d) shows another interpolation coordinate table corresponding to a viewpoint existing between the start viewpoint and the end viewpoint.

Fig. 5 is a flowchart showing the operation of the video image viewpoint conversion unit in the first embodiment of the present invention.

Fig. 6 is a block diagram schematically showing the structure of a video image conversion device in a second embodiment of the present invention.

Fig. 7 is a block diagram showing the structure of the viewpoint parameter interpolating unit in the second embodiment of the present invention.

Fig. 8 is a diagram for explaining the operation timings of the viewpoint parameter interpolating unit in the second embodiment of the present invention.

Fig. 9 is a diagram showing the relationship between the camera coordinate system and the video image coordinate system.

Fig. 10 is a flowchart showing the operation of the video image viewpoint conversion unit in the second embodiment of the present invention.

Fig. 11 is a block diagram schematically showing the structure of a video image conversion device in a third embodiment of the present invention.

Fig. 12(a) is a diagram showing the locations at which cameras are attached to a vehicle.

Fig. 12(b) is a diagram showing a combined video image formed by the cameras.

Fig. 13 is a diagram showing the drawing data corresponding to the combined video image shown in Fig. 12(b).

Figs. 14 are diagrams showing examples of data formats of the drawing data.

Fig. 15 (a) is a diagram showing an example of a video image formed where there are no obstacles.

Fig. 15 (b) is a diagram showing a positional relationship between a vehicle and an obstacle.

Fig. 15 (c) is a diagram showing an obstacle viewpoint in a case where an obstacle exists.

Fig. 16(a) is a diagram showing the positional relationship between a vehicle and an obstacle in a case where the distance between the vehicle and the obstacle is short.

Fig. 16(b) is a diagram showing the obstacle viewpoint in the case where the distance between the vehicle and the obstacle is short.

Fig. 16(c) is a diagram showing the positional relationship between a vehicle and an obstacle in a case where the distance between the vehicle and the obstacle is long.

Fig. 16(d) is a diagram showing the obstacle viewpoint in the case where the distance between the vehicle and the obstacle is long.

Fig. 17 is a block diagram specifically showing connections between the selector and the surrounding area.

MODES FOR CARRYING OUT THE INVENTION

The following is a detailed description of the present invention. However, the following detailed description and the accompanying drawings do not limit the invention. Instead, the scope of the invention is defined by the claims.

A video image conversion device of an embodiment of the present invention is a video image conversion device that converts a viewpoint of an input video image, and has a structure that includes: a viewpoint selecting unit that selects the viewpoint parameter for changing the viewpoint of the input video image to a start viewpoint, and the viewpoint parameter for changing the viewpoint of the input video image to an end viewpoint, the viewpoint parameters being selected from viewpoint parameters corresponding to viewpoints, the viewpoint parameters being stored beforehand and being for changing the viewpoint of a video image; a viewpoint parameter interpolating unit that generates an interpolated viewpoint parameter by interpolating the viewpoint parameter of the start viewpoint and the viewpoint parameter of the end viewpoint selected by the viewpoint selecting unit; and a viewpoint conversion unit that generates and outputs a viewpoint-converted video image by performing a viewpoint conversion on the input video image, based on the interpolated viewpoint parameter generated by the viewpoint parameter interpolating unit, the viewpoint conversion unit thereby presenting the viewpoint-converted video image in which the viewpoint is gradually switched between the start viewpoint and the end viewpoint.

With this structure, when a video image seen from more than one viewpoint prepared beforehand is presented to the driver, the viewpoint is not instantly switched, but is gradually switched between the start viewpoint and the end viewpoint. Accordingly, continuously smooth viewpoint switching can be performed. Also, there is no need to store the viewpoint parameters for generating viewpoint-converted video images during a viewpoint transition when viewpoint-converted video images are smoothly switched. Accordingly, an increase in necessary storage capacity can be prevented. When interpolated viewpoint parameters are generated between the viewpoint parameter of the start viewpoint and the viewpoint parameter of the end viewpoint, a viewpoint-converted video image is generated sequentially with the use of the interpolated viewpoint parameters from the one closest to the start viewpoint toward the end viewpoint. In this manner, a viewpoint-converted video image in which the viewpoint is gradually switched from the start viewpoint to the end viewpoint can be provided.

The video image conversion device of the embodiment of the present invention may further include a viewpoint parameter storage unit that stores viewpoint parameters corresponding to representative viewpoints. In this video image conversion device, the viewpoint selecting unit may select the viewpoint parameter of the start viewpoint and the viewpoint parameter of the end viewpoint from the viewpoint parameters of the representative viewpoints stored in the viewpoint parameter storage unit.

With this structure, the viewpoint can be smoothly moved between the representative viewpoints prepared in advance.

In the video image conversion device of the embodiment of the present invention, the viewpoint parameter may be a coordinate table in which the coordinates of the input video image to be referred to by the viewpoint conversion unit to generate the viewpoint-converted video image are written with respect to the respective coordinates of the viewpoint-converted video image, and the viewpoint conversion unit may generate the viewpoint-converted video image by referring to the pixel values of the input video image with respect to the respective coordinates of the viewpoint-converted video image in accordance with the coordinate table.

In this structure, the coordinate table is used as the viewpoint parameter, and this coordinate table is directly interpolated in the interpolating operation during a viewpoint transition. Accordingly, interpolation can be performed without any complicated calculations.

In the video image conversion device of the embodiment of the present invention, the viewpoint parameter may be a parameter set containing the rotation angle and parallel translation of the viewpoint in an operation to change the viewpoint from the viewpoint of the input video image. The video image conversion device may further include a coordinate conversion unit that determines the coordinates of the input video image to be referred to by the viewpoint conversion unit to generate the viewpoint-converted video image with respect to the respective coordinates of the viewpoint-converted video image, based on the viewpoint parameter. The viewpoint conversion unit may generate the viewpoint-converted video image by referring to pixel values of the coordinates of the input video image determined by the coordinate conversion unit, with respect to the respective coordinates of the viewpoint-converted video image.

In this structure, the viewpoint parameter storage unit simply has to store the parameter set as the viewpoint parameter. Accordingly, an increase in the storage capacity required for storing the viewpoint parameters can be prevented. As the parameter sets are used as the viewpoint parameters, image deformation due to interpolations is not caused in the viewpoint-converted video image between the start viewpoint and the end viewpoint.

In the video image conversion device of the embodiment of the present invention, the viewpoint parameters may be projective conversion coefficients.

In this structure, movement of a camera in the real space can be designated by setting the coefficient values of projective conversion formulas.

In the video image conversion device of the embodiment of the present invention, the input video image may be a video image obtained from a camera or a combined video image formed by combining video images obtained from two or more cameras. With this structure, a viewpoint conversion can be performed on a video image obtained from a camera, or a viewpoint conversion can be performed on a combined video image formed by combining video images obtained from two or more cameras.

In the video image conversion device of the embodiment of the present invention, the viewpoint selecting unit may select the viewpoint parameter of the start viewpoint and the viewpoint parameter of the end viewpoint in association with vehicle information containing a gear position, a vehicle speed, a direction indicator, and/or a steering angle.

With this structure, the driver does not need to do anything to switch viewpoints. Accordingly, a video image from an optimum viewpoint in each driving situation can be automatically presented to the driver, without interference with the driving.

The video image conversion device of the embodiment of the present invention may further include: a drawing data storage unit that stores drawing data to be superimposed on the input video image; a drawing data viewpoint conversion unit that generates viewpoint-converted drawing data by performing a viewpoint conversion on the drawing data, using the viewpoint parameter of the start viewpoint, the interpolated viewpoint parameter, and the viewpoint parameter of the end viewpoint; and a drawing superimposing unit that superimposes the viewpoint-converted drawing data on the viewpoint-converted video image, the viewpoint-converted drawing data corresponding to the viewpoint-converted video image.

With this structure, even where drawing data is to be superimposed on an input video image, the viewpoint can be smoothly moved by superimposing viewpoint-converted drawing data on a viewpoint-converted video image when the viewpoint is moved from the start viewpoint to the end viewpoint.

The video image conversion device of the embodiment of the present invention may further include an image processing unit that performs image processing on the viewpoint-converted video image. In this video image conversion device, the drawing superimposing unit may superimpose the viewpoint-converted drawing data on the viewpoint-converted video image subjected to the image processing performed by the image processing unit, the viewpoint-converted drawing data corresponding to the viewpoint-converted video image.

With this structure, the viewpoint-converted drawing data can be prevented from becoming blur or changing in hue due to the image processing.

In the video image conversion device of the embodiment of the present invention, when an obstacle near a vehicle is detected based on obstacle information containing information indicative of whether an obstacle exists near the vehicle, the viewpoint selecting unit may select the current viewpoint parameter as the viewpoint parameter of the start viewpoint, and an obstacle viewpoint parameter as the viewpoint parameter of the end viewpoint, the obstacle viewpoint parameter being for generating a viewpoint-converted video image from which the positional relationship between the obstacle and the vehicle can be recognized.

With this structure, when there is an obstacle near the vehicle, the normal viewpoint can be switched to a viewpoint from which the positional relationship between the obstacle and the vehicle can be recognized, and this viewpoint switching can also be performed smoothly.

In the video image conversion device of the embodiment of the present invention, the obstacle information may further contain information indicative of the direction of the obstacle and the distance from the vehicle to the obstacle. The video image conversion device may further include an obstacle viewpoint parameter generating unit that generates the obstacle viewpoint parameter, based on the information indicative of the direction of the obstacle and the distance from the vehicle to the obstacle, and the obstacle viewpoint parameter may be a viewpoint parameter for generating a viewpoint-converted video image in which an image of a close area is enlarged, with the vehicle and the obstacle being close to each other in the close area.

With this structure, a video image in which the image of the surrounding area of an obstacle in danger of colliding with the vehicle is automatically enlarged can be presented to the driver, while the viewpoint used prior to the enlarged display is being smoothly switched to the viewpoint of the enlarged video image.

In the video image conversion device of the embodiment of the present invention, the obstacle viewpoint parameter generating unit may generate the obstacle viewpoint parameter so that a viewpoint-converted video image with a higher enlargement ratio is generated when the distance between the vehicle and the obstacle is shorter.

With this structure, the image of a dangerous area with a higher possibility of contact between the vehicle and an obstacle is enlarged at a higher enlargement ratio. Accordingly, a video image from which each dangerous contact area is easily recognized can be presented to the driver.

In the video image conversion device of the embodiment of the present invention, the viewpoint conversion unit may present a viewpoint-converted video image in which the viewpoint is gradually switched from the start viewpoint to the end viewpoint in a period of time T. Here, the period of time T may be equivalent to the number of frames of video images to be displayed, and may be 2 or greater. The viewpoint parameter interpolating unit may generate (T-1) interpolated viewpoint parameters.

With this structure, the viewpoint can be smoothly switched between the start viewpoint and the end viewpoint in the period of time equivalent to a designated number of frames.

Another embodiment of the present invention is an image capture device that has a structure including: an input video image generating device that generates an input video image by capturing an image of the surrounding area of a vehicle with a camera; and one of the above-described video image conversion devices. With this structure, the above-described advantages of the present invention can also be achieved.

Yet another embodiment of the present invention is a video image conversion program for causing a computer to perform an operation to convert the viewpoint of an input video image. This video image conversion program causes the computer to: select the viewpoint parameter of a start viewpoint and the viewpoint parameter of an end viewpoint from viewpoint parameters corresponding to viewpoints, the viewpoint parameters being stored beforehand and being for changing the viewpoint of a video image; and generate an interpolated viewpoint parameter by interpolating the selected viewpoint parameter of the start viewpoint and the selected viewpoint parameter of the end viewpoint, and generate and output a viewpoint-converted video image by performing a viewpoint conversion on the input video image, based on the interpolated viewpoint parameter, the viewpoint conversion providing the viewpoint-converted video image in which the viewpoint is gradually switched between the start viewpoint and the end viewpoint.

Still another embodiment of the present invention is a computer-readable recording medium that records the above-described video image conversion program.

Yet another embodiment of the present invention is a video image conversion method for converting the viewpoint of an input video image. This video image conversion method includes: selecting the viewpoint parameter for changing the viewpoint of the input video image to a start viewpoint and the viewpoint parameter for changing the viewpoint of the input video image to an end viewpoint, the viewpoint parameters being selected from viewpoint parameters corresponding to viewpoints, the viewpoint parameters being stored beforehand and being for changing the viewpoint of a video image; and generating an interpolated viewpoint parameter by interpolating the selected viewpoint parameter of the start viewpoint and the selected viewpoint parameter of the end viewpoint, and generating and outputting a viewpoint-converted video image by performing a viewpoint conversion on the input video image, based on the interpolated viewpoint parameter, the viewpoint conversion providing the viewpoint-converted video image in which the viewpoint is gradually switched between the start viewpoint and the end viewpoint.

The following is a description of image capture devices each including a video image conversion device of an embodiment of the present invention, with reference to the accompanying drawings. The present invention relates to a video image conversion device that converts an input video image into a video image of a desired viewpoint, and an image capture device including the video image conversion device. In this specification, the "viewpoint" of a video image may also refer to the position and angle of the camera at the time when the camera is assumed to capture the video image, and may further refer to the angle of view of the camera (or the enlargement and reduction ratio of the video image).

(First Embodiment)

Fig. 1 is a block diagram schematically showing the structure of an image capture device of a first embodiment. The image capture device 100 includes a camera 10, a frame memory 20, a viewpoint parameter storage unit 30, a vehicle information transmitting unit 40, a video image viewpoint conversion unit 50, and an image processing circuit 60. The camera 10 is attached at a predetermined angle to a predetermined point on a vehicle. The camera 10 includes a lens 11, an imaging element 12, an A-D converter 13, and a video signal processing circuit 14. The camera 10 captures an image of an object existing near the vehicle, and generates a video signal. The lens 11 forms an image on the imaging element 12 with light from an object. The imaging element 12 photoelectrically transforms the formed image, and outputs an analog signal. The A-D converter 13 converts the analog signal output from the imaging element 12 into a digital signal. The video signal processing circuit 14 performs an OB subtraction, a white balance adjustment, and a noise reduction on the A-D converted video signal.

The frame memory 20 stores one frame of video signals subjected to video signal processing by the video signal processing circuit 14 of the camera 10, and outputs the video signals to the later described viewpoint conversion unit 503. The viewpoint parameter storage unit 30 stores viewpoint parameters for converting a video image captured and obtained by the camera 10 into video images from representative viewpoints. The viewpoint parameters corresponding to respective representative viewpoints are stored in the viewpoint parameter storage unit 30 for the representative viewpoints. The vehicle information transmitting unit 40 transmits vehicle information to be used for automatically switching viewpoints of a video image. Based on the vehicle information received from the vehicle information transmitting unit 40, the video image viewpoint conversion unit 50 performs a viewpoint conversion on a video image stored in the frame memory 20. The image processing circuit 60 separates luminance signals from color signals in each video image subjected to the viewpoint conversion at the video image viewpoint conversion unit 50, and performs luminance and color corrections on the video image.

The video image viewpoint conversion unit 50 performs video image viewpoint conversions using viewpoint parameters, and generates viewpoint-converted video images. The video image viewpoint conversion unit 50 also generates such viewpoint-converted video images that the viewpoint smoothly moves between two points. That is, the video image viewpoint conversion unit 50 does not change the view point from a viewpoint (a viewpoint 1) directly to another viewpoint (a viewpoint 2), but performs video image viewpoint conversions sequentially at several viewpoints between the viewpoint 1 and the viewpoint 2, so that the viewpoint smoothly moves between the viewpoint 1 and the viewpoint 2. The video image viewpoint conversion unit 50 then outputs viewpoint-converted video images. To realize such smooth movement of the viewpoint, the viewpoint parameter storage unit 30 may store the viewpoint parameters about all the viewpoints between the viewpoint 1 and the viewpoint 2, and the video image viewpoint conversion unit 50 may use the viewpoint parameters to sequentially generate viewpoint-converted video images so that the viewpoint sequentially moves. However, if the viewpoint parameters of all the viewpoints between the viewpoint 1 and the viewpoint 2 are stored in the viewpoint parameter storage unit 30, the capacity required for the viewpoint parameter storage unit 30 to have becomes extremely large. To counter this problem, only the viewpoint parameters of several representative viewpoints are stored in the viewpoint parameter storage unit 30 in this embodiment as described above, and the viewpoint parameters of intermediate viewpoints between a representative viewpoint and the next representative viewpoint are generated in each operation. In the following, the structure for such operations is described.

In this embodiment, the viewpoint parameter storage unit 30 stores representative viewpoint coordinate tables as the viewpoint parameters of representative viewpoints. The coordinate tables describe which pixel values of which coordinates of a video image captured by the camera 10 and stored in the frame memory 20 (hereinafter also referred to as the "original video image") should be referred to with respect to the respective coordinates (pixels) of a viewpoint-converted video image when the original image is coordinate-converted to generate the viewpoint-converted video image.

First, a viewpoint conversion using a coordinate table is described. Figs. 2 are diagrams for explaining a viewpoint conversion using a coordinate table. Fig. 2(a) shows an original video image, Fig. 2(b) shows a viewpoint-converted video image, and Fig. 2 (c) shows the coordinate table. In the coordinate table shown in Fig. 2(c), the reference coordinate values with respect to the original video image shown in Fig. 2(a) are written for the respective coordinates of the viewpoint-converted video image shown in Fig. 2(b). In the viewpoint conversion using the coordinate table shown in Figs. 2, based on the coordinate values (3, 10) stored at (0, 0) in the coordinate table shown in Fig. 2(c), the pixel values of the upper left coordinates (0, 0) of the viewpoint-converted video image shown in Fig. 2(b) are determined by referring to the pixel values of the coordinates (3, 10) of the original video image shown in Fig. 2(a). Likewise, the coordinates (0, 1) of the viewpoint-converted video image are determined by referring to the coordinates (4, 11) of the original video image. In this manner, a viewpoint conversion can be performed on a video image by using a coordinate table as viewpoint parameters.

It should be noted that the coordinate tables do not need to contain the reference coordinate values corresponding to all the pixels in a viewpoint-converted video image as shown in Figs. 2. For example, the coordinate tables may contain only the reference coordinate values of representative points at every eight pixels in the horizontal direction and every eight pixels in the vertical direction, and the reference coordinate values between those pixels can be determined through interpolations. Alternatively, the reference coordinate values may not necessarily be integers, but may be decimal values. If the reference coordinate values are decimal values, the values obtained by interpolating the pixel values of reference pixels by referring to pixels in a video image stored in the frame memory are used in viewpoint-converted video images. For example, if the reference coordinate values of some coordinates in a viewpoint-converted video image are (1, 1.7), the pixel values k of the coordinates in the viewpoint-converted video image is k = (the pixel values of the coordinates (1, 1) in the original video image x 0.3 + (the pixel values of the coordinates (1, 2) in the original video image) x 0.7).

The vehicle information transmitting unit 40 transmits vehicle information to the video image viewpoint conversion unit 50. Here, the vehicle information is for identifying each driving situation, and may contain information indicative of the gear position, the vehicle speed, the direction indicator, and the steering angle, for example. To transmit the information, an on-vehicle network such as the LIN (Local Interconnect Network) or the CAN (Controller Area Network) is used.

The video image viewpoint conversion unit 50 includes a viewpoint selecting unit 501, a viewpoint parameter interpolating unit 502, and a viewpoint conversion unit 503. First, the outline of the video image viewpoint conversion unit 50 is described. In the video image viewpoint conversion unit 50, the viewpoint selecting unit 501 receives vehicle information from the vehicle information transmitting unit 40, and, based on the vehicle information, selects the coordinate table of the viewpoint serving as the start point in a viewpoint transition (the start viewpoint), and the coordinate table of the viewpoint serving as the end point in the viewpoint transition (the end viewpoint), from the coordinate tables stored in the viewpoint parameter storage unit 30.

The viewpoint parameter interpolating unit 502 interpolates the two coordinate tables selected by the viewpoint selecting unit 501, so that the time required for the viewpoint transition from the start viewpoint to the end viewpoint becomes T. Specifically, the viewpoint parameter interpolating unit 502 outputs the coordinate table of the start viewpoint at time t, and outputs the coordinate table of the end viewpoint at time t+T. Between time t+1 and time t+T-1, the viewpoint parameter interpolating unit 502 generates and outputs transitional coordinate tables that gradually change from the coordinate table of the start viewpoint to the coordinate table of the end viewpoint. Here, a period of time T is the period of time required for the viewpoint transition from the start viewpoint to the end viewpoint. The period of time T is equivalent to the number of video image frames required for the viewpoint transition from the start viewpoint to the end viewpoint.

Using the coordinate tables output from the viewpoint parameter interpolating unit 502, the viewpoint conversion unit 503 sequentially performs viewpoint conversions on video images obtained from the frame memory 20, and generates viewpoint-converted video images. The viewpoint-converted video images are output from the viewpoint conversion unit 503 to the image processing circuit 60. The above-described respective components of the viewpoint conversion unit 50 may be realized by a LSI including an arithmetic processing circuit, a ROM, a RAM, a storage device, and the like, or may be realized by a computer device that executes computer programs.

Next, the structure for moving the viewpoint is described in detail. To move the viewpoint, the viewpoint selecting unit 501 automatically determines which viewpoint video image should be presented to the driver, based on the vehicle information received from the vehicle information transmitting unit 40, and selects two coordinate tables from representative viewpoint coordinate tables stored in the viewpoint parameter storage unit 30. Of the two coordinate tables, one is the coordinate table of the start viewpoint, and the other one is the coordinate table of the end viewpoint. When there is no need to move the viewpoint, the viewpoint selecting unit 501 selects only one coordinate table from the representative viewpoint coordinate tables stored in the viewpoint parameter storage unit 30.

In the following, how the viewpoint selecting unit 501 determines the start viewpoint and the end viewpoint based on the vehicle information is described. Fig. 3 is a diagram showing an example of the correspondence relationship between the vehicle information and the viewpoints of video images to be presented. In the following, an example case where the vehicle drives on the left side of the road is described. In the example shown in Fig. 3, viewpoints are switched, based on the three pieces of vehicle information: the gear position, the vehicle speed, and the direction indicator. A first check is made to determine whether the gear position is the reverse position, and, when the gear position is the reverse position, a video image of the vehicle's rear area (VP1) is constantly presented. If the gear position is not the reverse position, a second check is made based on the vehicle speed. In a case where the vehicle speed is 15 km/h or higher, a video image of the vehicle's left-side rear area (VP2) is presented when the direction indicator indicates "left", and a video image of the vehicle's right-side rear area (VP3) is presented when the direction indicator indicates "right". Video images of the vehicle's left-side rear area (VP2) and the vehicle's right-side rear area (VP3) are presented to confirm the safety on the side rear areas mainly when lanes are changed. When the vehicle speed is 15 km/h or higher, and the direction indicator is not used, the video image of the vehicle's rear area (VP1) is presented. In a case where the vehicle speed is lower than 15 km/h, a video image of the vehicle's left-side area (VP4) is presented when the direction indicator indicates "left", and the video image of the vehicle's rear area (VP1) is presented when the direction indicator does not indicate "left". The video image of the vehicle's left-side area (VP4) is presented to prevent entanglement mainly when a left turn is made. It should be noted that Fig. 3 merely shows an example of viewpoint selection using the vehicle information, and actual combinations and conditions are not limited to those shown in Fig. 3.

In the above viewpoint selection, the viewpoint selecting unit 501 selects one or two viewpoint parameters from the viewpoint parameter storage unit 30. The viewpoint selecting unit 501 selects two coordinate tables when there is a transition among the video images of VP1 through VP4 shown in Fig. 3. Here, the viewpoint selecting unit 501 selects the coordinate table corresponding to the viewpoint prior to the transition as the coordinate table of the start viewpoint, and the coordinate table corresponding to the viewpoint after the transition as the coordinate table of the end viewpoint, from the viewpoint parameter storage unit 30. When there is not a transition between video images, the viewpoint selecting unit 501 selects one coordinate table corresponding to the video image being output.

For example, in a case where the gear position is not the reverse position, and the vehicle is driving at a vehicle speed of 15 km/h or higher, the viewpoint selecting unit 501 selects the viewpoint parameter corresponding to the viewpoint of the vehicle rear area (VP1) of Fig. 3 from the viewpoint parameter storage unit 30 when the direction indicator continues to be unused. If the direction indicator then blinks at its left portion, the viewpoint selecting unit 501 selects, from the viewpoint parameter storage unit 30, the coordinate tables corresponding to the vehicle's rear area (VP1) as the start viewpoint and the vehicle's left-side rear area (VP2) as the end viewpoint, to switch the view point from the vehicle's rear area (VP1) to the vehicle's left-side rear area (VP2) of Fig. 3. When only one coordinate table is selected, it is considered that the same coordinate table is selected for both the start viewpoint and the end viewpoint.

A smooth viewpoint transition is performed with the use of the two viewpoint parameters selected by the viewpoint selecting unit 501. However, if video image transitions are switched several times in a short period of time, the viewpoint might be instantly changed to another viewpoint during a viewpoint transition. For example, when the direction indicator is switched from an unused state to a left indicating state while the vehicle is driving at a vehicle speed of 15 km/h or higher, the viewpoint selecting unit 501 selects the coordinate tables of the vehicle's rear area (VP1) as the start viewpoint and the vehicle's left-side rear area (VP2) as the end viewpoint. When the direction indicator is switched from the left indicating state to a right indicating state while smooth viewpoint switching is being performed with the two coordinate tables, the two coordinate tables of the vehicle's left-side rear area (VP2) and the vehicle's right-side rear area (VP3) are selected. As a result, while the video image is being switched from the video image of the vehicle's rear area (VP1) to the video image of the vehicle's left-side rear area (VP2), the video image being presented to the driver is suddenly changed from the video image of the vehicle's left-side rear area (VP2) to the video image of the vehicle's right-side rear area (VP3), and causes confusion. Therefore, the viewpoint selecting unit 501 maintains the selected start viewpoint and end viewpoint for a certain period of time in a video image switching operation, even if there is new video image switching.

The viewpoint parameter interpolating unit 502 performs an interpolating operation on the two coordinate tables selected by the viewpoint selecting unit 501, and generates coordinate tables corresponding to viewpoints existing between the viewpoints of the two coordinate tables. Figs. 4 show an example of a smooth interpolating operation that is performed on the two coordinate tables corresponding to the start viewpoint and the end viewpoint in the period of time T (T = 3). Fig. 4 (a) shows the coordinate table corresponding to the start viewpoint. Fig. 4(b) shows the coordinate table corresponding to the end viewpoint. Figs. 4(c) and 4(d) show interpolation coordinate tables corresponding to viewpoints existing between the start viewpoint and the end viewpoint. At time 0, a viewpoint conversion using the coordinate table shown in Fig. 4(a) is performed. At time 1, a viewpoint conversion using the coordinate table shown in Fig. 4(c) is performed. At time 2, a viewpoint conversion using the coordinate table shown in Fig. 4(d) is performed. At time 3, a viewpoint conversion using the coordinate table shown in Fig. 4(b) is performed. In this manner, the viewpoint is smoothly changed from the start viewpoint to the end viewpoint in the period of time 3.

The coordinate tables shown in Figs. 4(a) and 4(b) are stored as the coordinate tables of representative viewpoints beforehand in the viewpoint parameter storage unit 30, and are selected by the viewpoint selecting unit 501. Using the following mathematical formulas (1), the viewpoint parameter interpolating unit 502 determines the interpolation coordinate tables shown in Figs. 4(c) and 4(d).

[Formula 1]

$$\left.\begin{aligned} x_n &= x_0 + (x_T - x_0) \times \frac{n}{T} \\ y_n &= y_0 + (y_T - y_0) \times \frac{n}{T} \end{aligned}\right\} \cdots (1)$$

Here, xn and yn represent the x- and y-coordinates of respective pixels at time n in a smooth interpolating operation in the period of time T. That is, x0 and y0 represent the coordinates of each pixel at time 0 or at the start of the viewpoint moving, and xT and yT represent the coordinates of each pixel at time T or at the end of the viewpoint moving.

Using the coordinate tables sent from the viewpoint parameter interpolating unit 502, the viewpoint conversion unit 503 converts the video image viewpoint by performing a coordinate conversion on a video image (an original video image) obtained from the frame memory 20. Specifically, as described above with reference to Figs. 2, the viewpoint conversion unit 503 generates a viewpoint-converted video image by referring to the coordinates of the original images corresponding to the coordinates written in the coordinate tables.

Referring now to Fig. 5, the operation of the video image viewpoint conversion unit 50 having the above structure is described. First, the viewpoint selecting unit 501 obtains the vehicle information from the vehicle information transmitting unit 40 (step S51). Based on the vehicle information, the viewpoint selecting unit 501 then selects the coordinate tables of the start viewpoint and the end viewpoint from the viewpoint parameter storage unit 30, and sets the selected coordinate tables in the viewpoint parameter interpolating unit 502 (step S52). The viewpoint parameter interpolating unit 502 first transfers the coordinate table of the start viewpoint to the viewpoint conversion unit 503, and the viewpoint conversion unit 503 performs a viewpoint conversion on an original video image, using the coordinate table of the start viewpoint (step S53).

After that, the frame count value n is set at 1 (step S54), and a check is made to determine whether n is equal to T (step S55). When n is not equal to T (NO in step S55), the viewpoint parameter interpolating unit 502 assigns n to the mathematical formulas (1), and generates interpolation coordinate table (step S56). Using the generated interpolation coordinate table, the viewpoint conversion unit 503 performs a viewpoint conversion on a video image obtained from the frame memory 20 (step S57). After that, n is incremented (step S58), and the operation returns to step S55. The loop of steps S55 through S58 is repeated. When n becomes equal to T (YES in step S55), the viewpoint conversion unit 503 performs a viewpoint conversion on the video image obtained from the frame memory 20, using the coordinate table of the end viewpoint set in the viewpoint parameter interpolating unit 502 (step S59).

In the above-described image capture device of the first embodiment, two viewpoint parameters are smoothly switched in the period of time T. Accordingly, viewpoint-converted video images can be smoothly switched, and the probability that the driver loses his/her viewpoint when a video image of a viewpoint is switched directly to a video image of another viewpoint can be made lower.

Also, according to the image capture device of the first embodiment, there is no need to store the viewpoint parameters for generating viewpoint-converted video images during a viewpoint transition when viewpoint-converted video images are smoothly switched. Accordingly, an increase in necessary storage capacity can be prevented.

Further, in the image capture device of the first embodiment, the coordinate tables for generating viewpoint-converted video images are used as viewpoint parameters, and those coordinate tables are directly interpolated in the interpolating operation during each viewpoint transition. Accordingly, interpolations can be performed without any complicated calculations.

Further, in the image capture device of the first embodiment, viewpoint parameters can be automatically switched with the use of the vehicle information. Accordingly, driving by the driver is not interfered with, and an optimum video image for each driving situation can be constantly presented.

(Second Embodiment)

Next, an image capture device of a second embodiment of the present invention is described. In the image capture device 100 of the first embodiment, the viewpoint parameter storage unit 30 stores coordinate tables as viewpoint parameters. In this embodiment, on the other hand, a viewpoint parameter storage unit 31 stores viewpoint parameters that are parameter sets each consisting of the rotation angles, the parallel translations, and the enlargement and reduction ratio for a viewpoint conversion. A video image viewpoint conversion unit 51 of this embodiment performs a viewpoint conversion, using such parameter sets.

Fig. 6 is a block diagram schematically showing the structure of the image capture device of the second embodiment of the present invention. In Fig. 6, the same components as those of the first embodiment are denoted by the same reference numerals as those of the first embodiment, and explanation of them will not be repeated. The image capture device 200 of this embodiment includes a camera 10, a frame memory 20, a viewpoint parameter storage unit 31, a vehicle information transmitting unit 40, a video image viewpoint conversion unit 51, and an image processing circuit 60. The structures of the camera 10, the frame memory 20, the vehicle information transmitting unit 40, and the image processing circuit 60 are the same as those of the first embodiment.

In the viewpoint parameter storage unit 31, parameter sets each consisting of the rotation angles θx, θy, and θz with respect to the X-axis, Y-axis, and the Z-axis, the parallel translations mx and my, and the enlargement and reduction ratio R of an original video image for transforming an original video image into an video image from representative viewpoints are stored as viewpoint parameters.

In the following, the different aspects of the video image viewpoint conversion unit 51 of this embodiment from the video image viewpoint conversion unit 50 of the first embodiment are mainly described. The video image viewpoint conversion unit 51 includes a viewpoint selecting unit 511, a viewpoint parameter interpolating unit 512, a coordinate conversion unit 514, and a viewpoint conversion unit 513. As in the first embodiment, the above-described respective components of the video image viewpoint conversion unit 51 may be realized by a LSI including an arithmetic processing circuit, a ROM, a RAM, a storage device, and the like, or may be realized by a computer device that executes computer programs.

Like the viewpoint selecting unit 501 of the first embodiment, the viewpoint selecting unit 511 selects one or two viewpoint parameters stored in the viewpoint parameter storage unit 31, based on the vehicle information transmitted from the vehicle information transmitting unit 40. In this embodiment, however, the viewpoint selecting unit 511 does not select coordinate tables but selects parameter sets each consisting of the rotation angles, the parallel translations, and the enlargement and reduction ratio for converting the viewpoint of an original video image.

The viewpoint parameter interpolating unit 512 interpolates the two viewpoint parameters selected by the viewpoint selecting unit 511. Fig. 7 is a block diagram showing the structure of the viewpoint parameter interpolating unit 512. Fig. 8 is an operation timing chart of the viewpoint selecting unit 511 and the viewpoint parameter interpolating unit 512. As shown in Fig. 7, the viewpoint parameter interpolating unit 512 includes a viewpoint holding unit 5121 that holds the viewpoint parameter of the start viewpoint and the viewpoint parameter of the end viewpoint, a calculating unit 5122 that interpolates the two held viewpoints, and a frame counter 5123 that controls the timing to hold the viewpoint parameters and the weighting of the interpolations. The frame counter 5123 counts from 0 to time T. The viewpoint holding unit 5121 updates the viewpoint parameters when the counter value FC is 0, and holds the viewpoint parameters when the counter value FC is not 0. In the viewpoint holding unit 5121, a start viewpoint holding unit SVP holds the viewpoint parameter prior to viewpoint switching (the start viewpoint), and an end viewpoint holding unit EVP holds the viewpoint parameter after the viewpoint switching (the end viewpoint).

Fig. 8 shows a timing chart obtained when the gear position is not the reverse position, the vehicle is driving at a vehicle speed of 15 km/h or higher, and the direction indicator indicates "left". First, when the direction indicator is not being used, the output of the viewpoint selecting unit 511 is the viewpoint parameter of the vehicle’s rear area (VP1), and the output of the viewpoint parameter interpolating unit 512 is also the viewpoint parameter of the vehicle’s rear area (VP1). Those outputs are in a stabilized state. While the outputs are in a stabilized state, the counter value FC of the frame counter 5123 is 0. When the direction indicator switches from this state to a left indicating state, the viewpoint selecting unit 511 selects the two viewpoint parameters of the vehicle’s rear area (VP1) and the vehicle’s left-side rear area (VP2) from the viewpoint parameter storage unit 31, and outputs the selected viewpoint parameters to the viewpoint parameter interpolating unit 512. Since the counter value FC of the frame counter 5123 is 0 at this point, the viewpoint holding unit 5121 of the viewpoint parameter interpolating unit 512 updates the start viewpoint SVP to the viewpoint parameter of the vehicle’s rear area (VP1), and updates the end viewpoint EVP to the viewpoint parameter of the vehicle’s left-side rear area (VP2). The frame counter 5123 starts incrementing the counter value.

While the frame counter 5123 is counting up the counter value, the start viewpoint SVP and the end viewpoint EVP are in a held state, and a viewpoint parameter is calculated by interpolating and weighting the two viewpoint parameters of the vehicle’s rear area (VP1) and the vehicle’s left-side rear area (VP2) with the frame counter. The interpolation is expressed as the following mathematical formula (2):

[Formula 2]

$$\text{output from the viewpoint} = \frac{(T - FC) * \text{the start viewpoint} + FC * \text{the end viewpoint}}{T} \quad \cdots (2)$$

In the mathematical formula (2), FC represents the frame counter, and T represents the period of time required for smoothly switching the viewpoint. As indicated by the mathematical formula (2), in the weighted interpolation, when the counter value FC of the frame counter 5123 is close to 0, the viewpoint parameter of the start viewpoint is weighted with a large value. As the counter value of the frame counter 5123 approaches T, the viewpoint parameter of the end viewpoint is weighted with a larger value. It should be noted that, when viewpoint parameters are interpolated, the respective parameters constituting the viewpoint parameters are interpolated independently of one another by applying the mathematical formula (2) to each of the rotation angles θx, θy, and θz, the parallel translations mx and my, and the enlargement and reduction ratio R of the viewpoint parameters.

The method described above is the method of selecting the viewpoint parameters of the start viewpoint and the end viewpoint at the viewpoint selecting unit 511, and interpolating the viewpoint parameters (parameter sets each consisting of the rotation angles θx, θy, and θz, the parallel translations mx and my, and the enlargement and reduction ratio R) for smoothly moving the viewpoint at the viewpoint parameter interpolating unit 512 based on the selected viewpoint parameters. To convert the video image viewpoint using the viewpoint parameter obtained as above, the video image viewpoint conversion unit 51 further includes the coordinate conversion unit 514 and the viewpoint conversion unit 513.

In the following, a viewpoint conversion using a parameter set consisting of the rotation angles, the parallel translations, and the enlargement and reduction ratio of an original video image is described. Fig. 9 is a diagram showing the relationship between the camera coordinate system and the video image coordinate system. To project the point P (Xw, Yw, Zw) of the camera coordinate system on the video image coordinates (x, y), the following mathematical formulas (3) are used:

[Formula 3]

$$\left.\begin{aligned} x &= f \times \frac{X_w}{Z_w} \\ y &= f \times \frac{Y_w}{Z_w} \end{aligned}\right\} \quad \cdots (3)$$

Here, f represents the focal length of the camera.

The point P (Xw', Yw', Zw') obtained after the point P in the camera coordinate system is rotated by θx about the X-axis can be expressed by the following mathematical formulas (4) using rotation matrixes:

[Formula 4]

$$\begin{pmatrix} X_w' \\ Y_w' \\ Z_w' \end{pmatrix} = \begin{pmatrix} 1 & 0 & 0 \\ 0 & \cos\theta_x & -\sin\theta_x \\ 0 & \sin\theta_x & \cos\theta_x \end{pmatrix} \times \begin{pmatrix} X_w \\ Y_w \\ Z_w \end{pmatrix} = \begin{pmatrix} X_w \\ Y_w \cos\theta_x - Z_w \sin\theta_x \\ Y_w \sin\theta_x + Z_w \cos\theta_x \end{pmatrix} \quad \cdots(4)$$

The point (xx, yx) on the video image coordinates corresponding to the point P (Xw', Yw', Zw') after the rotation expressed by the above mathematical formula is expressed by the following mathematical formulas (5) using the video image coordinates (x, y):

[Formula 5]

$$\left.\begin{aligned} x_x &= \frac{x}{\frac{1}{f} y \sin\theta_x + \cos\theta_x} \\ y_x &= f \times \frac{\frac{1}{f} y \cos\theta_x - \sin\theta_x}{\frac{1}{f} y \sin\theta_x + \cos\theta_x} \end{aligned}\right\} \quad \cdots(5)$$

Likewise, the point (xy, yy) on the video image coordinates corresponding to the point obtained after the point P on the camera coordinate system is rotated by θy about the Y-axis is expressed by the following mathematical formulas (6) using the video image coordinates (x, y):

[Formula 6]

$$\left.\begin{aligned} x_y &= f \times \frac{\frac{1}{f} x \cos\theta_y + \sin\theta_y}{-\frac{1}{f} x \sin\theta_y + \cos\theta_y} \\ y_y &= \frac{y}{-\frac{1}{f} x \sin\theta_y + \cos\theta_y} \end{aligned}\right\} \cdots (6)$$

Likewise, the point (xz, yz) on the video image coordinates corresponding to the point obtained after the point P on the camera coordinate system is rotated by θz about the Z-axis is expressed by the following mathematical formulas (7) using the video image coordinates (x, y):

[Formula 7]

$$\left.\begin{aligned} x_z &= x\cos\theta_z - y\sin\theta_z \\ y_z &= x\sin\theta_z + y\cos\theta_z \end{aligned}\right\} \cdots (7)$$

By using the above mathematical formulas (5), (6), and (7), the point (xxyz, yxyz) on the video image coordinates corresponding to the point obtained after the point P on the camera coordinate system is rotated about the X-axis, the Y-axis, and the Z-axis is expressed by the following mathematical formulas (8) using the video image coordinates (x, y):

[Formula 8]

$$\left.\begin{aligned} x_{xyz} &= \frac{xf\cos\theta_y\cos\theta_z + yf\left(\sin\theta_x\sin\theta_y\cos\theta_z - \cos\theta_x\sin\theta_z\right) + f^2\left(\sin\theta_x\sin\theta_z + \cos\theta_x\sin\theta_y\cos\theta_z\right)}{-x\sin\theta_y + y\sin\theta_x\cos\theta_y + f\cos\theta_x\cos\theta_y} \\ y_{xyz} &= \frac{xf\cos\theta_y\sin\theta_z + yf\left(\sin\theta_x\sin\theta_y\sin\theta_z + \cos\theta_x\cos\theta_z\right) + f^2\left(\cos\theta_x\sin\theta_y\sin\theta_z - \sin\theta_x\cos\theta_z\right)}{-x\sin\theta_y + y\sin\theta_x\cos\theta_y + f\cos\theta_x\cos\theta_y} \end{aligned}\right\} \cdots (8)$$

Next, the parallel translations and the enlargement or reduction are described. Where the parallel translations on the video image coordinates are (mx, my), and the enlargement and reduction ratio is R, the point (x', y') on the video coordinates after rotations, parallel translations, and an enlargement or reduction is expressed by the following mathe-

matical formula (9):

[Formula 9]

$$\left.\begin{aligned} x' &= R \times x_{xyz} + mx \\ y' &= R \times y_{xyz} + my \end{aligned}\right\} \cdots (9)$$

As described above, by using a total of six parameters of the rotation angles θx, θy, and θz with respect to the X-axis, the Y-axis, and the Z-axis on the camera coordinate system, the parallel translations mx and my on the video image coordinates, and the enlargement end reduction ratio R, three-dimensional movement of the camera on the camera coordinate system can be expressed on the video image coordinates.

Based on the viewpoint parameters (θx, θy, θz, mx, my, and R) output from the viewpoint parameter interpolating unit 512, the coordinate conversion unit 514 determines the converted coordinates (x', y') converted from subject coordinate values (x, y) on the video image coordinate axes, using the mathematical formulas (9). The converted coordinates (x', y') are the coordinates representing the pixels to be referred to in a viewpoint-converted video image among the pixels of a video image stored in the frame memory 20. That is, the converted coordinates (x', y') converted from the coordinates (x, y) indicate that the pixel values of the coordinates (x', y') of a video image stored in the frame memory 20 are referred to in the coordinates (x, y) of a viewpoint-converted video image.

The viewpoint conversion unit 513 performs a viewpoint conversion, using the converted coordinates (x', y'). That is, the pixel values of the coordinates (x', y') of a video image stored in the frame memory 20 are referred to and are output as the subject coordinates (x, y), to generate a viewpoint-converted video image having the viewpoint of the original video image converted. It should be noted that (x, y) are the coordinates of the video image to be output, and therefore, the entire screen should be sequentially scanned to generate a viewpoint-converted video image. Also, if the converted coordinates (x', y') are decimal values, a result obtained by interpolating two or more pixels should be output as described in the first embodiment. The coordinate conversion unit 513 outputs the viewpoint-converted video image to the image processing circuit 60.

Referring now to Fig. 10, the operation of the video image viewpoint conversion unit 51 having the above structure is described. First, the viewpoint selecting unit 511 obtains the vehicle information from the vehicle information transmitting unit 40 (step S101). Based on the vehicle information, the viewpoint selecting unit 511 then selects the viewpoint parameters of the start viewpoint and the end viewpoint from the viewpoint parameter storage unit 31, and sets the selected viewpoint parameters in the viewpoint parameter interpolating unit 512 (step S102). The viewpoint parameter interpolating unit 512 first determines an interpolated viewpoint parameter by assigning the frame counter value FC to the mathematical formula (2) (step S103). As is apparent from the mathematical formula (2), the first interpolated viewpoint parameter (where FC is 0) is the viewpoint parameter of the start viewpoint selected from the viewpoint parameter storage unit 31. After the viewpoint parameter interpolating unit 512 transfers the obtained viewpoint parameter to the coordinate conversion unit 514, the coordinate conversion unit 514 converts the viewpoint parameter into converted coordinates, using the mathematical formulas (9) (step S104). Using the converted coordinates, the viewpoint conversion unit 513 then converts the original video image to generate a viewpoint-converted video image (step S105).

After that, a check is made to determine whether the counter value FC of the frame counter 5123 is T (step S106). If FC is not equal to T (NO in step S106), the counter value FC is incremented by 1 (step S107), and the operation returns to step S103. The loop of steps S103 through S107 is repeated until the counter value FC becomes equal to T. When FC becomes equal to T (YES in step S106), the operation comes to an end. As is apparent from the mathematical formulas (9), the viewpoint parameter obtained in step S103 for the last time (where FC is equal to T) in the loop is the viewpoint parameter of the end viewpoint selected from the viewpoint parameter storage unit 31.

With the image capture device of the second embodiment, the following effects are achieved as well as the same effects as those achieved with the image capture device of the first embodiment. In the image capture device of the second embodiment, only one parameter set consisting of the six parameters corresponding to a subject viewpoint should be defined to express the subject viewpoint. Accordingly, parameter sets each consisting of six parameters should be stored as the viewpoint parameters of respective representative viewpoints in the viewpoint parameter storage unit 31. Therefore, the storage capacity required for the viewpoint parameter storage unit to have can be made much smaller than that in a case where coordinate tables are stored as the viewpoint parameters of representative viewpoints.

Also, between the start viewpoint and the end viewpoint, an interpolating operation is performed on the respective parameters (the rotation angles θx, θy, and θz, the parallel translations mx and my, and the enlargement and reduction ratio R) constituting each viewpoint parameter. Accordingly, less deformation is caused in the viewpoint-converted video images between the start viewpoint and the end viewpoint, compared with a case where coordinate tables are directly interpolated. Thus, more natural and smoother viewpoint-converted video images can be presented.

In the above-described embodiment, parameter sets each consisting of the six parameters of the rotation angles θx, θy, and θz, the parallel translations mx and my, and the enlargement and reduction ratio R are used as viewpoint parameters. However, viewpoint parameters are not limited to those parameter sets. For example, the mathematical formulas (8) may be projective transformation formulas expressed by the following mathematical formulas (10):

[Formula 10]

$$\left.\begin{aligned} x' &= \frac{R_{x1}x + R_{x2}y + R_{x3}}{R_{x4}x + R_{x5}y + R_{x6}} \\ y' &= \frac{R_{y1}x + R_{y2}y + R_{y3}}{R_{y4}x + R_{y5}y + R_{y6}} \end{aligned}\right\} \cdots (10)$$

Here, the projective transformation coefficients Rx1 through Rx6 and Ry1 through Ry6 of the mathematical formulas (10) can be used as viewpoint parameters. In this case, the objects to be interpolated by the viewpoint parameter interpolating unit 502 increase to a total of 12 coefficients Rx1 through Rx6 and Ry1 through Ry6. However, the coordinate conversion unit 514 only has to perform calculations according to the mathematical formulas (10), and accordingly, the amount of calculation can be made smaller than that in a case where the viewpoint parameters are the rotation angles θx, θy, and θz, the parallel translations mx and my, and the enlargement and reduction ratio R.

In the above-described embodiment, the viewpoint changes at a constant rate as indicated by the mathematical formula (2) for the viewpoint parameter interpolating unit 512 to perform weighted interpolations. However, weighted interpolations are not limited to them. For example, weighting can be performed so that the viewpoint movement appears to rapidly starts, and slowly come to an end. The trajectory of the variation in weighting in this case has a shape similar to that of a logarithmic function.

(Third Embodiment)

The following is a description of an image capture device of a third embodiment of the present invention, with reference to the accompanying drawings.

Fig. 11 is a block diagram schematically showing the structure of the image capture device of the third embodiment. The image capture device 300 of this embodiment includes cameras 10a through 10d, a video image combining unit 15, a frame memory 20, a viewpoint parameter storage unit 31, a drawing data storage unit 70, a vehicle information transmitting unit 40, an obstacle information transmitting unit 80, a video image drawing viewpoint conversion unit 52, an image processing circuit 60, and a drawing superimposing circuit 61.

The cameras 10a through 10d are attached to respective sites around the vehicle, and capture images of objects existing around the vehicle to generate a video signal. The specific structure of each of the cameras 10a through 10d is the same as the camera 10 of the first embodiment. The video image combining unit 15 combines video images input from the cameras 10a through 10d. The frame memory 20 stores one frame of video signals of combined video images formed by the video image combining unit 15. The viewpoint parameter storage unit 31 stores viewpoint parameters for performing viewpoint conversions on video images. The viewpoint parameters stored here are parameter sets each consisting of rotation angles, parallel translations, and an enlargement and reduction ratio, as in the second embodiment. However, coordinate tables may be stored as viewpoint parameters in the viewpoint parameter storage unit 31, as in the first embodiment. The drawing data storage unit 70 stores drawing data to be superimposed on combined video images formed by the video image combining unit 15. The vehicle information transmitting unit 40 transmits the vehicle information to be used for automatically switching video image viewpoints, as in the first embodiment.

The obstacle information transmitting unit 80 transmits obstacle information to be used for automatically switching video image viewpoints, depending on whether an obstacle exists around the vehicle. Using viewpoint parameters selected from the viewpoint parameter storage unit 31 and obstacle viewpoint parameters for zooming the surrounding area of an obstacle, the video image drawing viewpoint conversion unit 52 performs viewpoint conversions on video images stored in the frame memory 20 and the drawing data stored in the drawing data storage unit 70. Here, the viewpoint parameters are selected based on the information indicative of the gear position and the vehicle speed received from the vehicle information transmitting unit 40, as in the first embodiment. The obstacle viewpoint parameters are generated based on the information indicative of whether an obstacle exists, the direction of the obstacle, and the distance from the obstacle. Such information is received from the obstacle information transmitting unit 80. The image processing circuit 60 separates luminance signals from color signals in each video image subjected to the viewpoint conversion at the video image drawing viewpoint conversion unit 52, and performs luminance and color corrections on the video image. The drawing superimposing circuit 61 superimposes the drawing data subjected to the viewpoint conversion at the video image drawing viewpoint conversion unit 52, on each video image output from the image processing circuit 60.

The video image drawing viewpoint conversion unit 52 includes a viewpoint selecting unit 521, an obstacle viewpoint parameter generating unit 526, a selector 525, a viewpoint parameter interpolating unit 522, a coordinate conversion unit 524, and a viewpoint conversion unit 523. As in the above-described embodiments, the above-described respective components of the video image drawing viewpoint conversion unit 52 may be realized by a LSI including an arithmetic processing circuit, a ROM, a RAM, a storage device, and the like, or may be realized by a computer device that executes computer programs. The viewpoint selecting unit 521 selects two viewpoint parameters from the viewpoint parameters stored in the viewpoint parameter storage unit 31, based on the vehicle information transmitted from the vehicle information transmitting unit 40. However, in a case where there is no need to change viewpoints, the viewpoint selecting unit 521 selects only one viewpoint parameter.

The obstacle viewpoint parameter generating unit 526 receives, from the obstacle information transmitting unit 80, the information indicative of whether an obstacle exists around the vehicle, the direction of the obstacle, and the distance to the obstacle, and generates the obstacle viewpoint parameters for presenting a video image of the surrounding area of the obstacle if there exists one. The selector 525 receives the information indicative of whether there exists an obstacle from the obstacle information transmitting unit 80. If there is not an obstacle, the selector 525 transmits one or two viewpoint parameters selected by the viewpoint selecting unit 521 to the viewpoint parameter interpolating unit 522. If there exists an obstacle, the selector 525 transmits the two viewpoint parameters of the viewpoint parameter output from the viewpoint parameter interpolating unit 522 and the obstacle viewpoint parameter generated by the obstacle viewpoint parameter generating unit 526 to the viewpoint parameter interpolating unit 522 even during a viewpoint switching operation. It should be noted that the output of the viewpoint parameter interpolating unit 522 is the viewpoint parameter corresponding to the viewpoint being currently displayed.

The viewpoint parameter interpolating unit 522 performs an interpolation so that the two viewpoint parameters selected by the selector 525 are gradually switched in the period of time T. Based on the viewpoint parameter output from the viewpoint parameter interpolating unit 522, the coordinate conversion unit 524 determines the converted coordinates (x', y') converted from subject coordinate values (x, y) on the video image coordinate axes. The converted coordinates (x', y') are the coordinates that refer to a video image stored in the frame memory 20 and drawing data stored in the drawing data storage unit 70 in a viewpoint-converted video image and viewpoint-converted drawing data (described later).

Using the converted coordinates (x', y'), the viewpoint conversion unit 523 performs a viewpoint conversion on each of a video image (an original video image) stored in the frame memory 20 and drawing data (original drawing data) stored in the drawing data storage unit 70. To perform a viewpoint conversion on an original video image, the viewpoint conversion unit 523 refers to the pixel values of the video image coordinates (x', y') with respect to the subject coordinates (x, y) of a viewpoint-converted video image, as in the second embodiment. To perform a viewpoint conversion on drawing data, the viewpoint conversion unit 523 refers to the pixel values of the coordinates (x', y') of the original drawing data with respect to the subject coordinates (x, y) of viewpoint-converted drawing data. The viewpoint conversion unit 523 outputs the viewpoint-converted video image to the image processing circuit 60, and outputs the viewpoint-converted drawing data to the drawing superimposing circuit 61.

In the following, the features of the image capture device 300 of this embodiment compared with the first and second embodiments are described in greater detail. Compared with the first and second embodiment, this embodiment is characterized in that camera video images are combined, drawing data is superimposed on a camera video image, and viewpoints are switched in accordance with obstacles. In the following, those features are described one by one.

First, the combining of camera video images is described. As described above, the image capture device 300 of this embodiment includes the cameras 10a through 10d, and the video image combining unit 15 combines video images captured by those cameras, to generate a combined video image. Fig. 12(a) is a diagram showing the positions of the cameras 10a through 10d attached to a vehicle C. Fig. 12(b) is a combined video image generated by combining video images captured by those cameras. As shown in Fig. 12(a), the cameras 10a through 10d are provided in four positions on the front, rear, left, and right sides of the vehicle. The video image combining unit 15 combines video images supplied from the cameras 10a through 10d, to generate a video image as if the image of the vehicle is captured from a bird's-eye viewpoint as shown in Fig. 12(b). Video images supplied from cameras are normally combined by using coordinate tables each indicating a set of a designated camera and coordinates.

Next, the superimposing of drawing data on a camera video image is described. First, drawing data is described. The drawing data corresponding to the combined video image formed by the video image combining unit 15 is stored in the drawing data storage unit 70. Fig. 13 shows an example of the drawing data corresponding to the combined video image shown in Fig. 12(b). The drawing data contains indication lines indicative of the front and side widths of the vehicle, an indication line indicative of the distance for an aid in rearward parking, the trajectory indicative of directions, marking, and the like. The drawing data is automatically converted in accordance with a video image through a viewpoint conversion in a later stage.

Figs. 14 are diagrams showing examples of data formats of the drawing data. The simplest data format of the drawing data is the video image data format shown in Fig. 14(a). In this case, a drawing shape is expressed by using a drawing pixel for each pixel. This data format has the advantage that a drawing shape can be arbitrarily set. However, the drawing data storage unit 70 needs to store the drawing data as video image data. Therefore, this data format has the disadvantage that a certain storage capacity is required. Still, the drawing shape is normally not very complicated in the case where the drawing data is in the form of video image data, and accordingly, the storage capacity can be effectively reduced through a simple video image compression method such as the run-length method.

Also, the drawing data can be expressed by a function, as shown in Fig. 14 (b). A function f (x) can be the nth function of x, as shown by the following mathematical formula (11):

[Formula 11]

$$f(x) = ax^n + bx^{n-1} + \cdot \cdot \cdot + z \qquad \cdots (11)$$

When f(x) is a linear function of x, the drawing shape is only a direct line. When f (x) is a high-dimensional function equal to or higher than a quadratic function, a curved line can be drawn. The drawing data containing the above-described indication lines and the like can be sufficiently coped with by a quadratic or cubic function. In the case where the drawing data is in the form of a function, the storage capacity of the drawing data storage unit 70 can be made smaller than that in the case where the drawing data is in the form of video image data. Also, the drawing shape can be readily varied by changing the coefficient of the function. Because of those advantages, a trajectory can be drawn in association with the steering angle, if the coefficient of the function for drawing a trajectory line is made to vary with the steering angle of the vehicle, for example. In such a case, the information indicative of the steering angle can be obtained from the vehicle information transmitting unit 40.

The drawing data is read into the viewpoint conversion unit 523. Using the converted coordinates (x', y') received from the coordinate conversion unit 524, the viewpoint conversion unit 523 performs a viewpoint conversion on the drawing data. At this point, the same converted coordinates as the converted coordinates used for the combined video image read from the frame memory 20 as the combined video image corresponding to the drawing data is also used for the drawing data. The viewpoint conversion performed on the drawing data with the use of the converted coordinates (x', y') is the same as the viewpoint conversion performed on the video image. That is, as the subject coordinates (x, y) of the viewpoint-converted drawing data, the pixel values of the original drawing data corresponding to reference coordinates (x', y') are referred to. The viewpoint-converted drawing data generated through the viewpoint conversion is output from the viewpoint conversion unit 523 to the drawing superimposing circuit 61. Meanwhile, the combined video image subjected to the viewpoint conversion at the viewpoint conversion unit 523 is output to the image processing circuit 60, as in the second embodiment. At the drawing superimposing circuit 61, the viewpoint-converted drawing data is superimposed on the viewpoint-converted video image.

As described above, in this embodiment, a viewpoint conversion is not performed on superimposed data obtained by superimposing drawing data on a combined video image. Instead, a viewpoint conversion using converted coordinates (x', y') is performed on a combined video image, and a viewpoint conversion using the same converted coordinates (x', y') is performed on drawing data. Image processing is then performed only on the viewpoint-converted video image at the image processing circuit 60, and the viewpoint-converted drawing data is superimposed on the viewpoint-converted video image. In this manner, the quality of the drawing of the drawing data can be made higher. That is, lines such as trajectories are normally thin, and colors for those lines are normally designated. Therefore, if image processing is performed simultaneously on drawing data and a video image, the line might become blur or change in hue due to a noise reduction or a color correction or the like, and the output drawing data differs from the originally designated drawing data. To avoid such an unwanted situation, drawing data may be labeled and processed separately. However, the process becomes complicated. Therefore, only the pixels of a video image are input to the image processing circuit 60, and the drawing superimposing circuit 26 superimposes drawing data on the video image subjected to image processing.

Next, the switching of viewpoints in accordance with the obstacle information is described. The obstacle information is the information about an object that exists in the vicinity of the vehicle and is in danger of colliding with the vehicle. The obstacle information contains the information indicative of whether an obstacle exists, the direction of the obstacle, and the distance between the obstacle and the vehicle. The obstacle information transmitting unit 80 transmits the information to the obstacle viewpoint parameter generating unit 526 and the selector 525. To transmit the information, an on-vehicle network such as the LIN or CAN is used. According to a well-known method, an obstacle may be detected with a sonar provided in the vicinity of the vehicle, or may be detected through a video image recognition using a camera provided in the vicinity of the vehicle. Here, any method of detecting an obstacle can be used, as long as the above-described obstacle information can be obtained with certain precision.

The obstacle viewpoint parameter generating unit 526 receives the obstacle information (the information indicative of whether an obstacle exists, the direction of the obstacle, and the distance to the obstacle) from the obstacle information transmitting unit 80. If an obstacle exists, the obstacle viewpoint parameter generating unit 526 generates an obstacle viewpoint parameter for presenting a video image of the surrounding area of the obstacle to the driver, based on the information indicative of the direction of the obstacle and the distance to the obstacle. Specifically, if an obstacle exists, the obstacle viewpoint parameter generating unit 526 generates an obstacle viewpoint parameter for setting a bird's-eye viewpoint as the viewpoint of the video image to be presented to the driver, and enlarging the displayed image of the surrounding area of the obstacle. With this arrangement, the driver can easily recognize the positional relationship between the obstacle and the vehicle, and the distance to the obstacle.

Figs. 15 are diagrams for explaining an example of a viewpoint where there exists an obstacle. Fig. 15(a) shows a video image in a situation where there are no obstacles, and the viewpoint of the video image is a bird's-eye viewpoint as a normal viewpoint from which the front, rear, left, and right sides of the vehicle can be evenly seen. Fig. 15(b) shows an example of a positional relationship between a vehicle and an obstacle. In this example, an obstacle O exists on the rear right side of a vehicle C. Fig. 15 (c) is a diagram showing an obstacle viewpoint VW in the case where the obstacle O exists as shown in Fig. 15 (b). Where the obstacle O exists as shown in Fig. 15 (b), the area in which part of the vehicle and the obstacle are close to each other is enlarged as the obstacle viewpoint VW for showing part of the vehicle C and the obstacle O.

The zoom ratio of the obstacle viewpoint varies with the distance between the vehicle and the obstacle. Figs. 16 show the relationships between the distance from a vehicle to an obstacle and example displays. Fig. 16 (a) is a diagram showing the positional relationship between a vehicle and an obstacle, and illustrates a case where the distance between the vehicle C and the obstacle O is short. Fig. 16(b) shows the obstacle viewpoint VW in the case illustrated in Fig. 16 (a). Fig. 16 (c) is a diagram showing the positional relationship between a vehicle and an obstacle, and illustrates a case where the distance between the vehicle C and the obstacle O is long. Fig. 16 (d) shows the obstacle viewpoint VW in the case illustrated in Fig. 16 (c). As shown in Figs. 16(a) through 16(d), zooming in is performed when the vehicle C is closer to the obstacle O, and zooming out is performed when the vehicle C is further away from the obstacle O. When the distance from the vehicle C to the obstacle O becomes equal to or longer than a predetermined distance, the viewpoint is returned from the obstacle viewpoint to the normal viewpoint.

The video image drawing viewpoint conversion unit 52 smoothly switches the viewpoint from the normal viewpoint to the obstacle viewpoint in the period of time T. In the following, the structure for this operation is described. Fig. 17 is a block diagram specifically showing connections between the selector 525 and the surrounding area. The selector 525 receives the information indicative of whether there exists an obstacle from the obstacle information transmitting unit 80, and switches parameters to be transferred to the viewpoint parameter interpolating unit 522, depending on the existence of an obstacle. The selector 525 switches viewpoint parameters that are input from the viewpoint selecting unit 521, the obstacle viewpoint parameter generating unit 526, and the viewpoint parameter interpolating unit 522, and outputs the viewpoint parameters to the viewpoint parameter interpolating unit 522.

When there are no obstacles according to the obstacle information received from the obstacle information transmitting unit 80, the selector 525 outputs the two viewpoint parameters that are input from the viewpoint selecting unit 521. In this case, the same viewpoint switching operation as those in the first and second embodiments is performed. When there is an obstacle, the selector 525 outputs the viewpoint parameter input from the viewpoint parameter interpolating unit 522 as the viewpoint parameter of the start viewpoint, and outputs the obstacle viewpoint parameter input from the obstacle viewpoint parameter generating unit 526 as the viewpoint parameter of the end viewpoint. The viewpoint parameter that is input from the viewpoint parameter interpolating unit 502 at this point is a viewpoint parameter being switched, if the viewpoint is being currently moved. The viewpoint parameter is a fixed viewpoint parameter, if the viewpoint is not being moved but is fixed. Accordingly, when there exists an obstacle, the currently displayed viewpoint can be instantly switched to an obstacle viewpoint. The viewpoint parameter interpolating unit 522 and the coordinate conversion unit 524 interpolate viewpoint parameters to perform a coordinate conversion in the same manner as in the first and second embodiments.

With the image capture device of the third embodiment, the following effects are achieved as well as the same effects as those achieved in the first and second embodiments. That is, with the image capture device of the third embodiment, the viewpoint can be smoothly moved from one viewpoint to another, even in a case where drawing data is superimposed on a camera video image. While the viewpoint is being smoothly moved, the drawing data is correctly superimposed on a camera video image.

Also, in the image capture device of the third embodiment, only the drawing data corresponding to the combined video image formed by the video image combining unit 15 is stored in the drawing data storage unit 70, and the drawing data during a viewpoint moving operation is determined by converting the viewpoint of the drawing data that is stored in advance. Accordingly, there is no need to store all the drawing data for respective viewpoint parameters in advance, and the storage capacity of the drawing data storage unit 70 can be made smaller.

Furthermore, in the image capture device of the third embodiment, when there is an obstacle in the vicinity of the vehicle, the viewpoint is switched from a normal viewpoint to an obstacle viewpoint from which the image of the area surrounding the obstacle is enlarged in a bird's eye view so that the positional relationship between the obstacle and the vehicle becomes apparent. The viewpoint switching in this case can also be smoothly performed.

In the above-described third embodiment, the viewpoint conversion unit 523 performs a viewpoint conversion on a combined video image, using converted coordinates (x', y'). The viewpoint conversion unit 523 also performs a viewpoint conversion on drawing data, using the converted coordinates (x', y'). The image processing circuit 60 performs image processing only on the viewpoint-converted video image, and the drawing superimposing circuit 61 superimposes the viewpoint-converted drawing data on the viewpoint-converted video image subjected to the image processing. However, the present invention is not limited to this operation. For example, if there is a drawing pixel in the coordinates (x', y') of the drawing data stored in the drawing data storage unit 70, the viewpoint conversion unit 523 refers to the pixel values of the coordinates (x', y') of the drawing data, and outputs the pixel values to the drawing superimposing circuit 61. If there are no drawing data in the drawing data coordinates (x', y'), the viewpoint conversion unit 523 may refer to the pixel values of the coordinates (x', y') of the combined video image stored in the frame memory 20, and output the pixel values to the image processing circuit 60.

In the above-described first through third embodiments, the period of time T is equal to 3. However, the period of time T may be adjusted to each user's liking. As T becomes greater, the viewpoint switching becomes smoother. However, a longer period of time is required to reach the end viewpoint. On the other hand, as T becomes smaller, the viewpoint switching approaches sudden switching, but the period of time required to reach the end viewpoint becomes shorter. When T is equal to 1, the viewpoint switching becomes sudden switching.

In the above-described first through third embodiments, operations to be performed by the video signal processing circuit 14 include an OB subtraction, a white balance adjustment, and a noise reduction. However, those three operations may not be performed, or operations other than those three may be performed by the video signal processing circuit. For example, video signal processing operations may include a shading correction and a gamma correction.

Although the currently conceivable preferred embodiments of the present invention have been described so far, it should be understood that various modifications may be made to those embodiments, and all those modifications within the spirit and scope of the invention are included in the claims.

## INDUSTRIAL APPLICABILITY

As described above, a video image conversion device and an image capture device including the video image conversion device according to the present invention can perform smooth viewpoint switching operations. Accordingly, a video image that appears to be being captured with a moving camera can be presented to the driver, and the driver can correctly recognize the viewpoint of the video image. Thus, the video image conversion device and the image capture device according to the present invention are useful as a video image conversion device that converts an input video image into a video image of a desired viewpoint, and an image capture device including such a video image conversion device.

## DESCRIPTION OF REFERENCE NUMERALS

10 camera
15 video image combining unit
20 frame memory
30, 31 viewpoint parameter storage unit
40 vehicle information transmitting unit
50, 51 video image viewpoint conversion unit
52 video image drawing viewpoint conversion unit

501, 511, 521 viewpoint selecting unit
502, 512, 522 viewpoint parameter interpolating unit
503, 513, 523 viewpoint conversion unit
514, 524 coordinate conversion unit
525 selector
526 obstacle viewpoint parameter generating unit
60 image processing circuit
61 drawing superimposing circuit
70 drawing data storage unit
80 obstacle information transmitting unit
100, 200, 300 image capture device

## Claims

**1.** A video image conversion device that converts a viewpoint of an input video image, comprising:

a viewpoint selecting unit that selects a viewpoint parameter for changing the viewpoint of the input video image to a start viewpoint, and a viewpoint parameter for changing the viewpoint of the input video image to an end viewpoint, the viewpoint parameters being selected from a plurality of viewpoint parameters corresponding to a plurality of viewpoints, the plurality of viewpoint parameters being stored beforehand and being for changing a viewpoint of a video image;
a viewpoint parameter interpolating unit that generates an interpolated viewpoint parameter by interpolating the viewpoint parameter of the start viewpoint and the viewpoint parameter of the end viewpoint selected by the viewpoint selecting unit; and
a viewpoint conversion unit that generates a viewpoint-converted video image by performing a viewpoint conversion on the input video image, based on the interpolated viewpoint parameter generated by the viewpoint parameter interpolating unit, the viewpoint conversion unit presenting the viewpoint-converted video image in which the viewpoint is gradually switched between the start viewpoint and the end viewpoint.

**2.** The video image conversion device according to claim 1, further comprising a viewpoint parameter storage unit that stores a plurality of viewpoint parameters corresponding to a plurality of representative viewpoints,
wherein the viewpoint selecting unit selects the viewpoint parameter of the start viewpoint and the viewpoint parameter of the end viewpoint from the viewpoint parameters of the plurality of representative viewpoints stored in the viewpoint parameter storage unit.

**3.** The video image conversion device according to claim 1 or 2, wherein
the viewpoint parameter is a coordinate table in which coordinates of the input video image to be referred to by the viewpoint conversion unit to generate the viewpoint-converted video image are written with respect to respective coordinates of the viewpoint-converted video image, and
the viewpoint conversion unit generates the viewpoint-converted video image by referring to pixel values of the input video image with respect to the respective coordinates of the viewpoint-converted video image in accordance with the coordinate table.

**4.** The video image conversion device according to claim 1 or 2, wherein
the viewpoint parameter is a parameter set containing rotation angle and parallel translation of the viewpoint in an operation to change the viewpoint from the viewpoint of the input video image,
the video image conversion device further comprises a coordinate conversion unit that determines coordinates of the input video image to be referred to by the viewpoint conversion unit to generate the viewpoint-converted video image with respect to respective coordinates of the viewpoint-converted video image, based on the viewpoint parameter, and
the viewpoint conversion unit generates the viewpoint-converted video image by referring to pixel values of the coordinates of the input video image determined by the coordinate conversion unit, with respect to the respective coordinates of the viewpoint-converted video image.

**5.** The video image conversion device according to claim 1 or 2, wherein the viewpoint parameters are projective conversion coefficients.

**6.** The video image conversion device according to any one of claims 1 to 5, wherein the input video image is one of a video image obtained from a camera and a combined video image formed by combining a plurality of video images obtained from a plurality of cameras.

**7.** The video image conversion device according to any one of claims 2 to 6, wherein the viewpoint selecting unit selects the viewpoint parameter of the start viewpoint and the viewpoint parameter of the end viewpoint in association with vehicle information containing a gear position, a vehicle speed, a direction indicator, and/or a steering angle.

**8.** The video image conversion device according to any one of claims 1 to 7, further comprising:

a drawing data storage unit that stores drawing data to be superimposed on the input video image;
a drawing data viewpoint conversion unit that generates viewpoint-converted drawing data by performing a viewpoint conversion on the drawing data, using the viewpoint parameter of the start viewpoint, the interpolated viewpoint parameter, and the viewpoint parameter of the end viewpoint; and
a drawing superimposing unit that superimposes the viewpoint-converted drawing data on the viewpoint-converted video image, the viewpoint-converted drawing data corresponding to the viewpoint-converted video image.

**9.** The video image conversion device according to claim 8, further comprising an image processing unit that performs image processing on the viewpoint-converted video image,
wherein the drawing superimposing unit superimposes the viewpoint-converted drawing data on the viewpoint-converted video image subjected to the image processing performed by the image processing unit, the viewpoint-converted drawing data corresponding to the viewpoint-converted video image.

**10.** The video image conversion device according to claim 1, wherein, when an obstacle near a vehicle is detected based on obstacle information containing information indicative of whether an obstacle exists near the vehicle, the viewpoint selecting unit selects a current viewpoint parameter as the viewpoint parameter of the start viewpoint, and an obstacle viewpoint parameter as the viewpoint parameter of the end viewpoint, the obstacle viewpoint parameter being for generating a viewpoint-converted video image from which a positional relationship between the obstacle and the vehicle can be recognized.

**11.** The video image conversion device according to claim 10, wherein
the obstacle information further contains information indicative of a direction of the obstacle and a distance from the vehicle to the obstacle,
the video image conversion device further comprises an obstacle viewpoint parameter generating unit that generates the obstacle viewpoint parameter, based on the information indicative of the direction of the obstacle and the distance from the vehicle to the obstacle, and
the obstacle viewpoint parameter is a viewpoint parameter for generating a viewpoint-converted video image in which an image of a close area is enlarged, the vehicle and the obstacle being close to each other in the close area.

**12.** The video image conversion device according to claim 11, wherein the obstacle viewpoint parameter generating unit generates the obstacle viewpoint parameter so that a viewpoint-converted video image with a higher enlargement ratio is generated when the distance between the vehicle and the obstacle is shorter.

**13.** The video image conversion device according to any one of claims 1 to 12, wherein
the viewpoint conversion unit presents a viewpoint-converted video image in which the viewpoint is gradually switched from the start viewpoint to the end viewpoint in a period of time T, the period of time T being 2 or greater, the period of time T being equivalent to the number of frames of video images to be displayed, and
the viewpoint parameter interpolating unit generates (T-1) interpolated viewpoint parameters, each of the (T-1) interpolated viewpoint parameters being the interpolated viewpoint parameter.

**14.** An image capture device comprising:

an input video image generating device that generates the input video image by capturing an image of a surrounding area of a vehicle with a camera; and
the video image conversion device according to any one of claims 1 to 13.

**15.** A video image conversion program for causing a computer to perform an operation to convert a viewpoint of an input video image, the program causing the computer to:

select a viewpoint parameter of a start viewpoint and a viewpoint parameter of an end viewpoint from a plurality of viewpoint parameters corresponding to a plurality of viewpoints, the plurality of viewpoint parameters being stored beforehand and being for changing a viewpoint of a video image; and
generate an interpolated viewpoint parameter by interpolating the selected viewpoint parameter of the start viewpoint and the selected viewpoint parameter of the end viewpoint, and generate and output a viewpoint-converted video image by performing a viewpoint conversion on the input video image, based on the interpolated viewpoint parameter,

wherein the viewpoint conversion providing the viewpoint-converted video image in which the viewpoint is gradually switched between the start viewpoint and the end viewpoint.

**16.** A computer-readable recording medium storing the video image conversion program according to claim 15.

**17.** A video image conversion method for converting a viewpoint of an input video image, the video image conversion method comprising:

selecting a viewpoint parameter for changing the viewpoint of the input video image to a start viewpoint and a viewpoint parameter for changing the viewpoint of the input video image to an end viewpoint, the viewpoint parameters being selected from a plurality of viewpoint parameters corresponding to a plurality of viewpoints, the plurality of viewpoint parameters being stored beforehand and being for changing a viewpoint of a video image; and
generating an interpolated viewpoint parameter by interpolating the selected viewpoint parameter of the start viewpoint and the selected viewpoint parameter of the end viewpoint, and generating and outputting a viewpoint-converted video image by performing a viewpoint conversion on the input video image, based on the interpolated viewpoint parameter,

wherein the viewpoint conversion providing the viewpoint-converted video image in which the viewpoint is gradually switched between the start viewpoint and the end viewpoint.

FIG.1

100

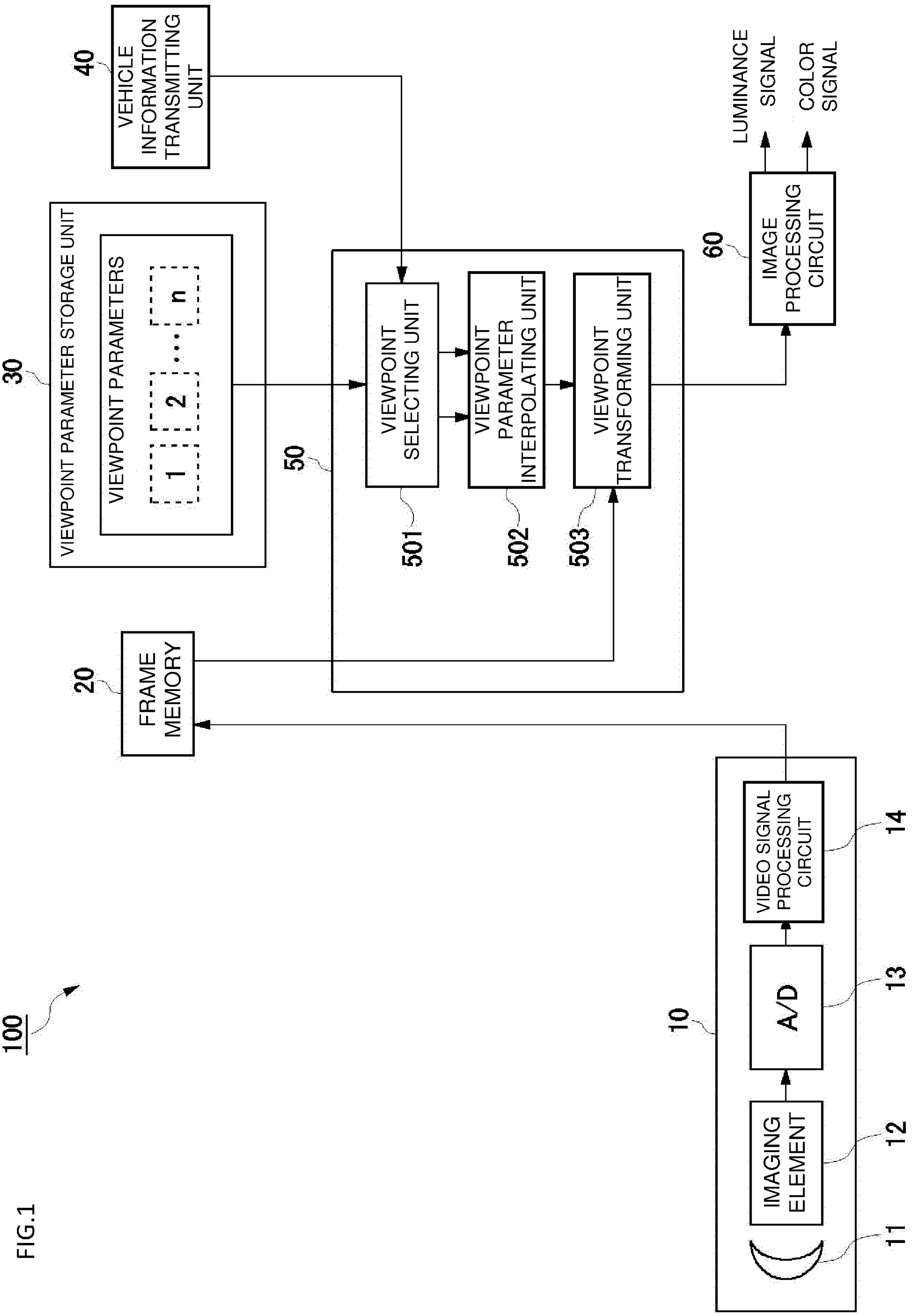
VIEWPOINT PARAMETER STORAGE UNIT
VIEWPOINT PARAMETERS
1
2
n
30
VEHICLE INFORMATION TRANSMITTING UNIT
40
FRAME MEMORY
20
50
VIEWPOINT SELECTING UNIT
VIEWPOINT PARAMETER INTERPOLATING UNIT
VIEWPOINT TRANSFORMING UNIT
501
502
503
IMAGE PROCESSING CIRCUIT
60
LUMINANCE SIGNAL
COLOR SIGNAL
10
IMAGING ELEMENT
A/D
VIDEO SIGNAL PROCESSING CIRCUIT
11
12
13
14

FIG.2

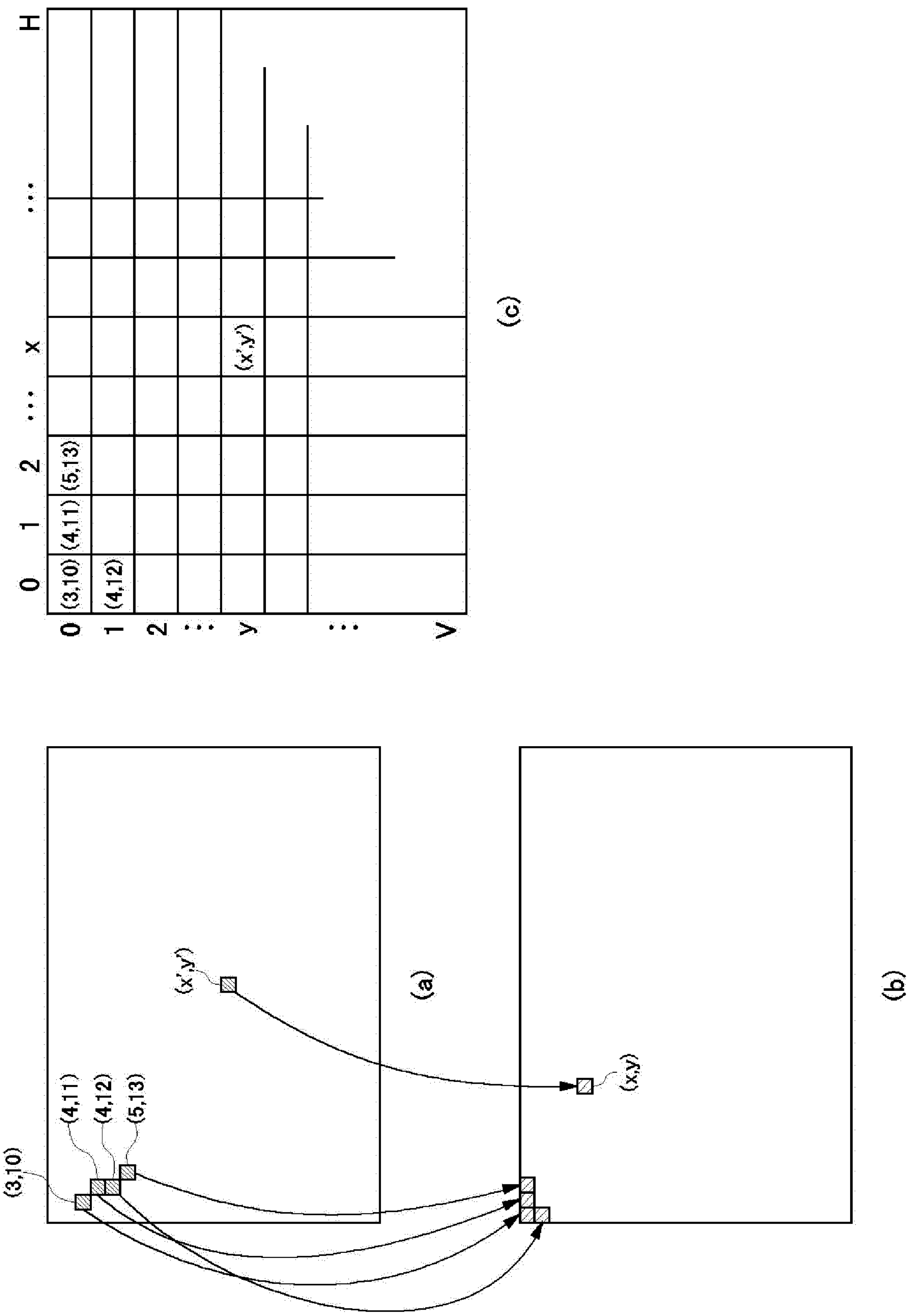

FIG.3

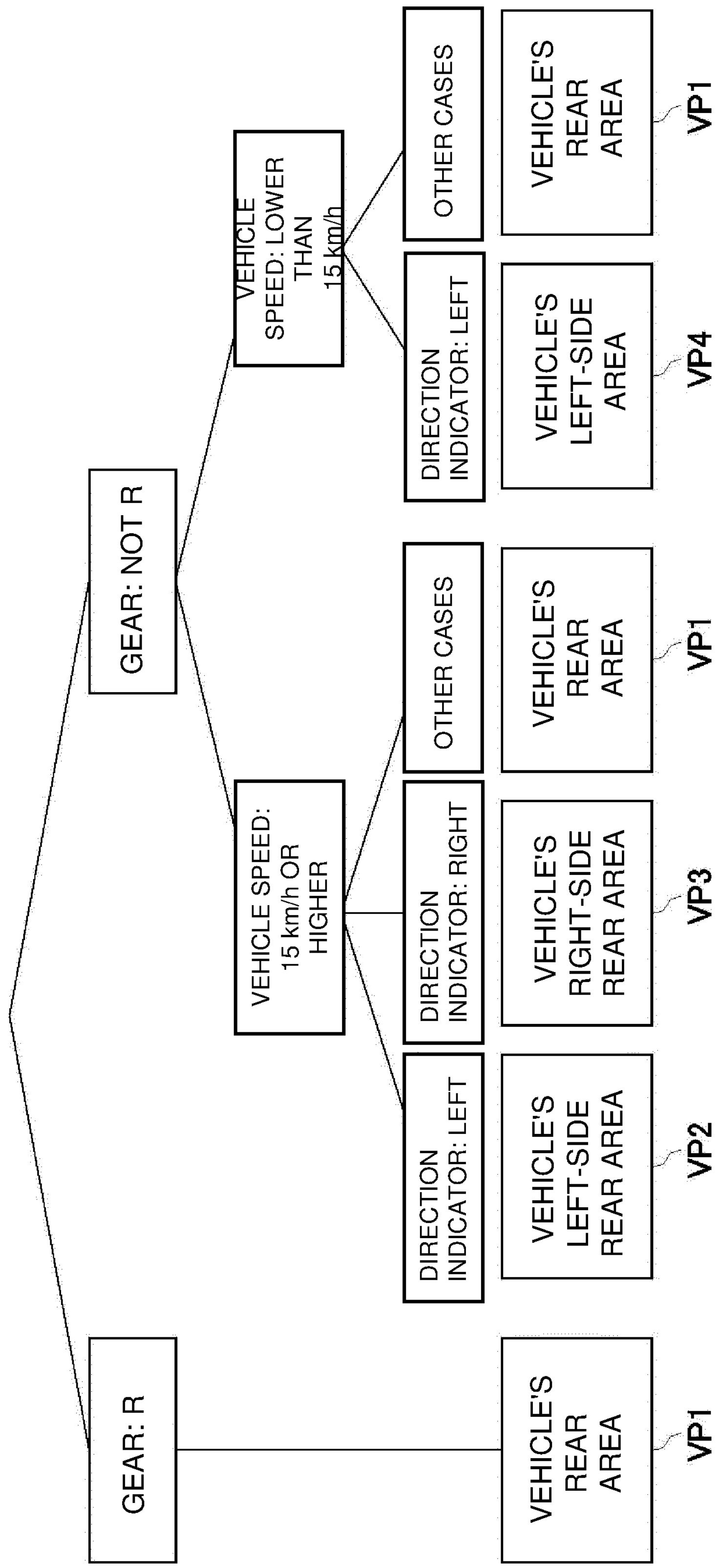
GEAR: R
VEHICLE'S REAR AREA
VP1
GEAR: NOT R
VEHICLE SPEED: 15 km/h OR HIGHER
DIRECTION INDICATOR: LEFT
VEHICLE'S LEFT-SIDE REAR AREA
VP2
DIRECTION INDICATOR: RIGHT
VEHICLE'S RIGHT-SIDE REAR AREA
VP3
OTHER CASES
VEHICLE'S REAR AREA
VP1
VEHICLE SPEED: LOWER THAN 15 km/h
DIRECTION INDICATOR: LEFT
VEHICLE'S LEFT-SIDE AREA
VP4
OTHER CASES
VEHICLE'S REAR AREA
VP1

FIG.4

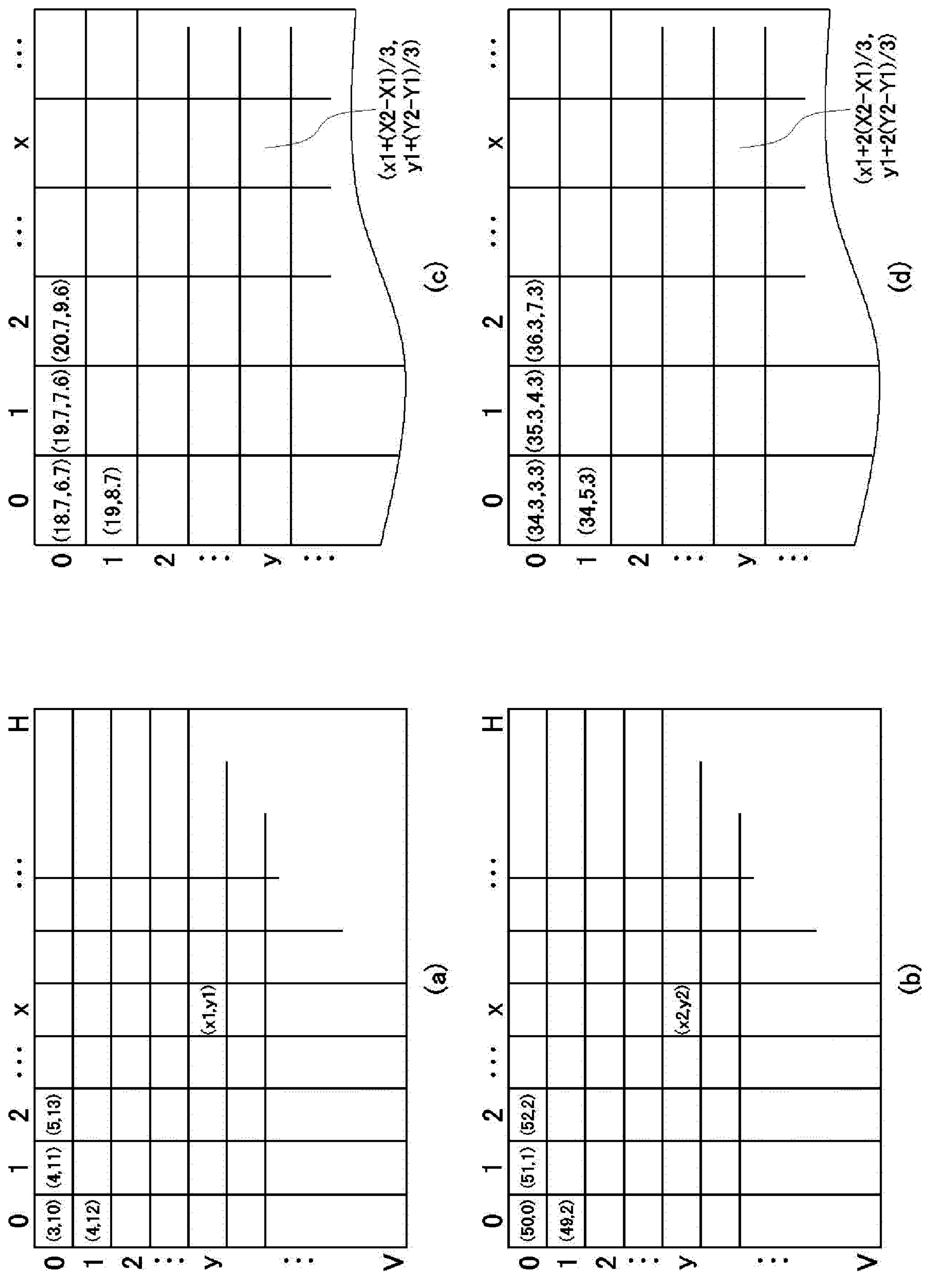
(a)
(3,10)
(4,11)
(5,13)
(4,12)
(x1,y1)
(b)
(50,0)
(51,1)
(52,2)
(49,2)
(x2,y2)
(c)
(18.7,6.7)
(19.7,7.6)
(20.7,9.6)
(19,8.7)
(x1+(X2−X1)/3,
y1+(Y2−Y1)/3)
(d)
(34.3,3.3)
(35.3,4.3)
(36.3,7.3)
(34,5.3)
(x1+2(X2−X1)/3,
y1+2(Y2−Y1)/3)
x
y
H
V

FIG.5

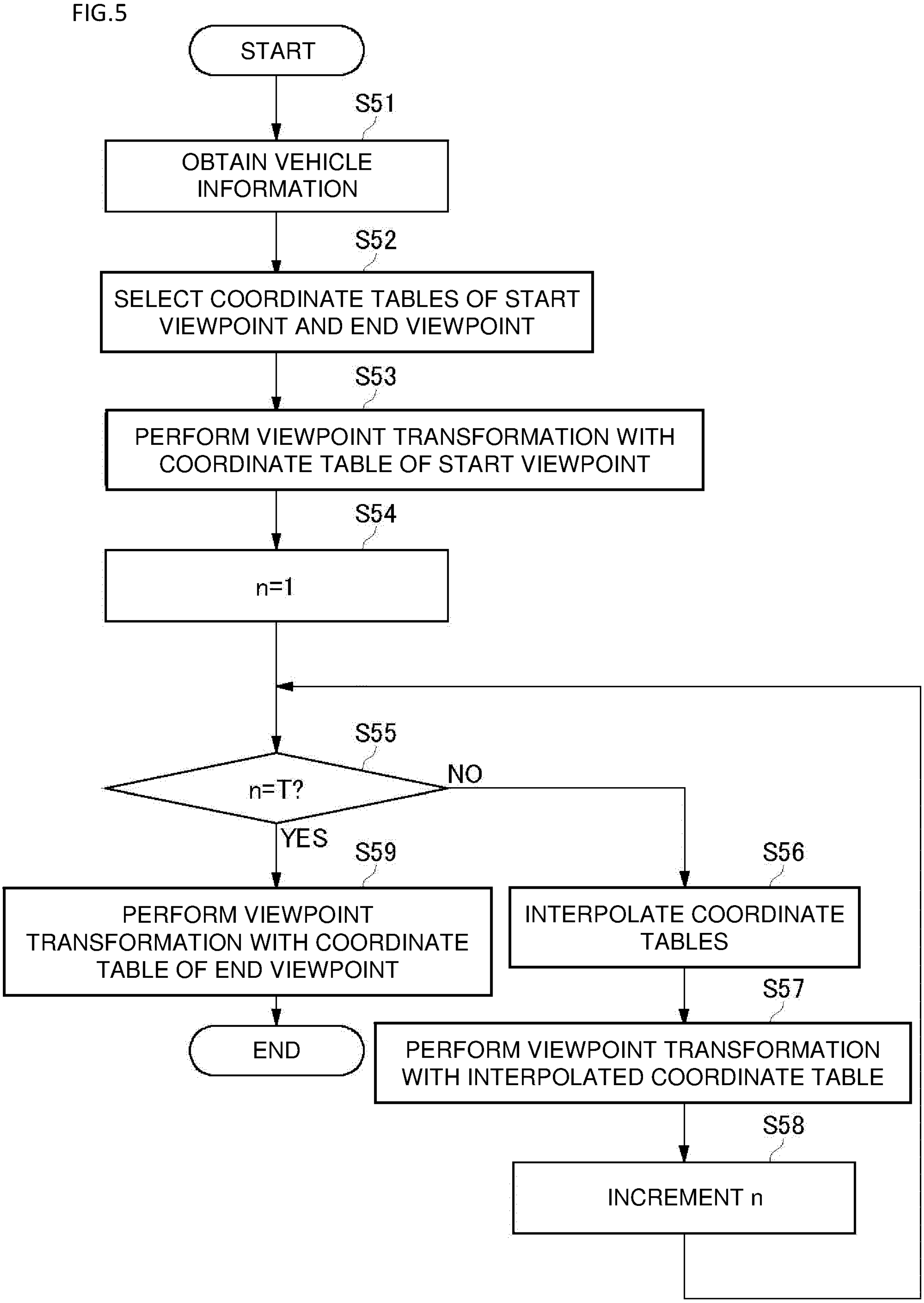
START
S51
OBTAIN VEHICLE INFORMATION
S52
SELECT COORDINATE TABLES OF START VIEWPOINT AND END VIEWPOINT
S53
PERFORM VIEWPOINT TRANSFORMATION WITH COORDINATE TABLE OF START VIEWPOINT
S54
n=1
S55
n=T?
NO
YES
S59
PERFORM VIEWPOINT TRANSFORMATION WITH COORDINATE TABLE OF END VIEWPOINT
END
S56
INTERPOLATE COORDINATE TABLES
S57
PERFORM VIEWPOINT TRANSFORMATION WITH INTERPOLATED COORDINATE TABLE
S58
INCREMENT n

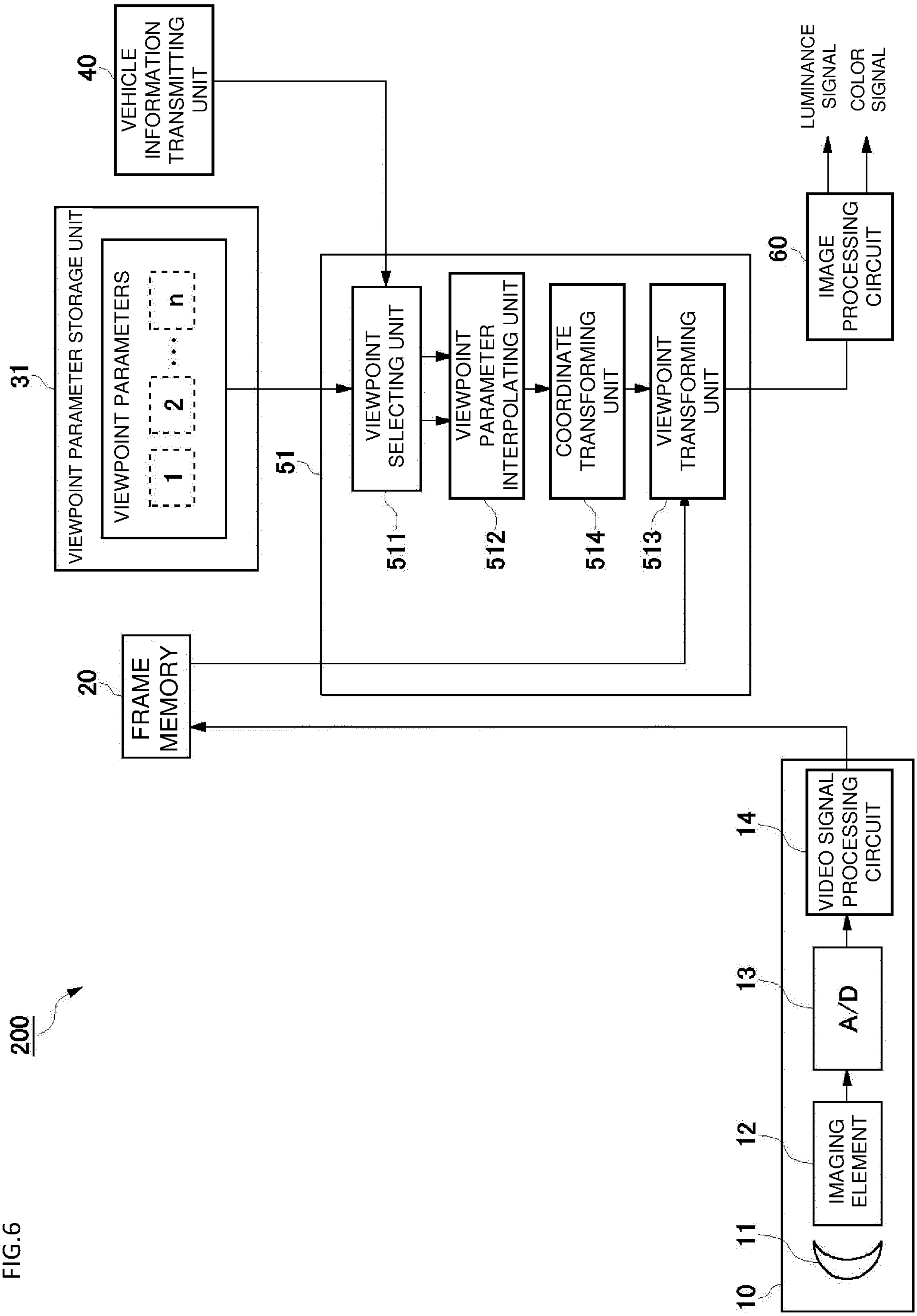
200
10
11
12
IMAGING ELEMENT
13
A/D
14
VIDEO SIGNAL PROCESSING CIRCUIT
20
FRAME MEMORY
31
VIEWPOINT PARAMETER STORAGE UNIT
VIEWPOINT PARAMETERS
1
2
n
40
VEHICLE INFORMATION TRANSMITTING UNIT
51
VIEWPOINT SELECTING UNIT
511
VIEWPOINT PARAMETER INTERPOLATING UNIT
512
COORDINATE TRANSFORMING UNIT
514
VIEWPOINT TRANSFORMING UNIT
513
60
IMAGE PROCESSING CIRCUIT
LUMINANCE SIGNAL
COLOR SIGNAL
FIG.6

FIG.7

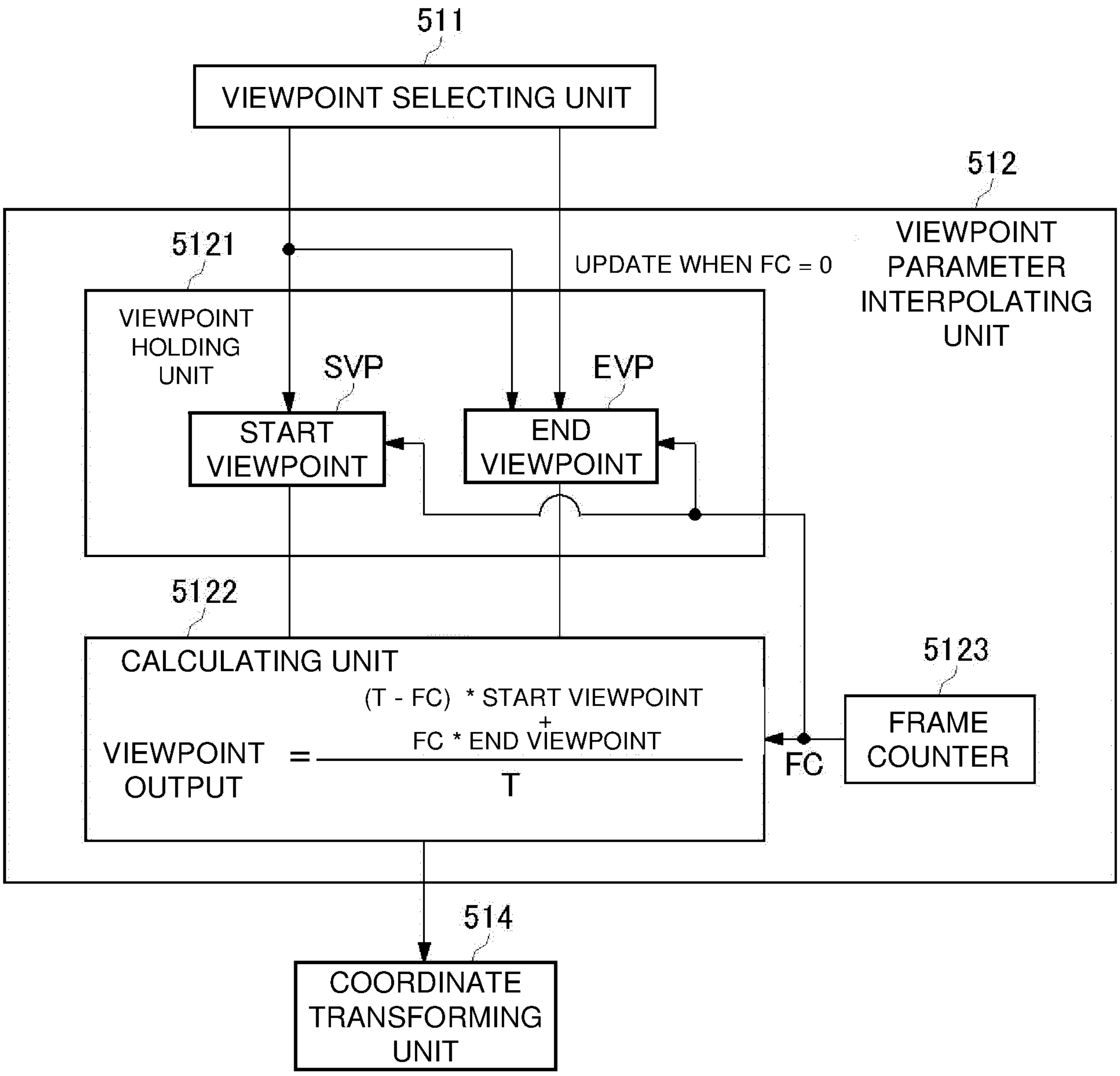
511
VIEWPOINT SELECTING UNIT
512
VIEWPOINT PARAMETER INTERPOLATING UNIT
5121
UPDATE WHEN FC = 0
VIEWPOINT HOLDING UNIT
SVP
EVP
START VIEWPOINT
END VIEWPOINT
5122
CALCULATING UNIT
VIEWPOINT OUTPUT = ((T - FC) * START VIEWPOINT + FC * END VIEWPOINT) / T
5123
FRAME COUNTER
FC
514
COORDINATE TRANSFORMING UNIT

FIG.8

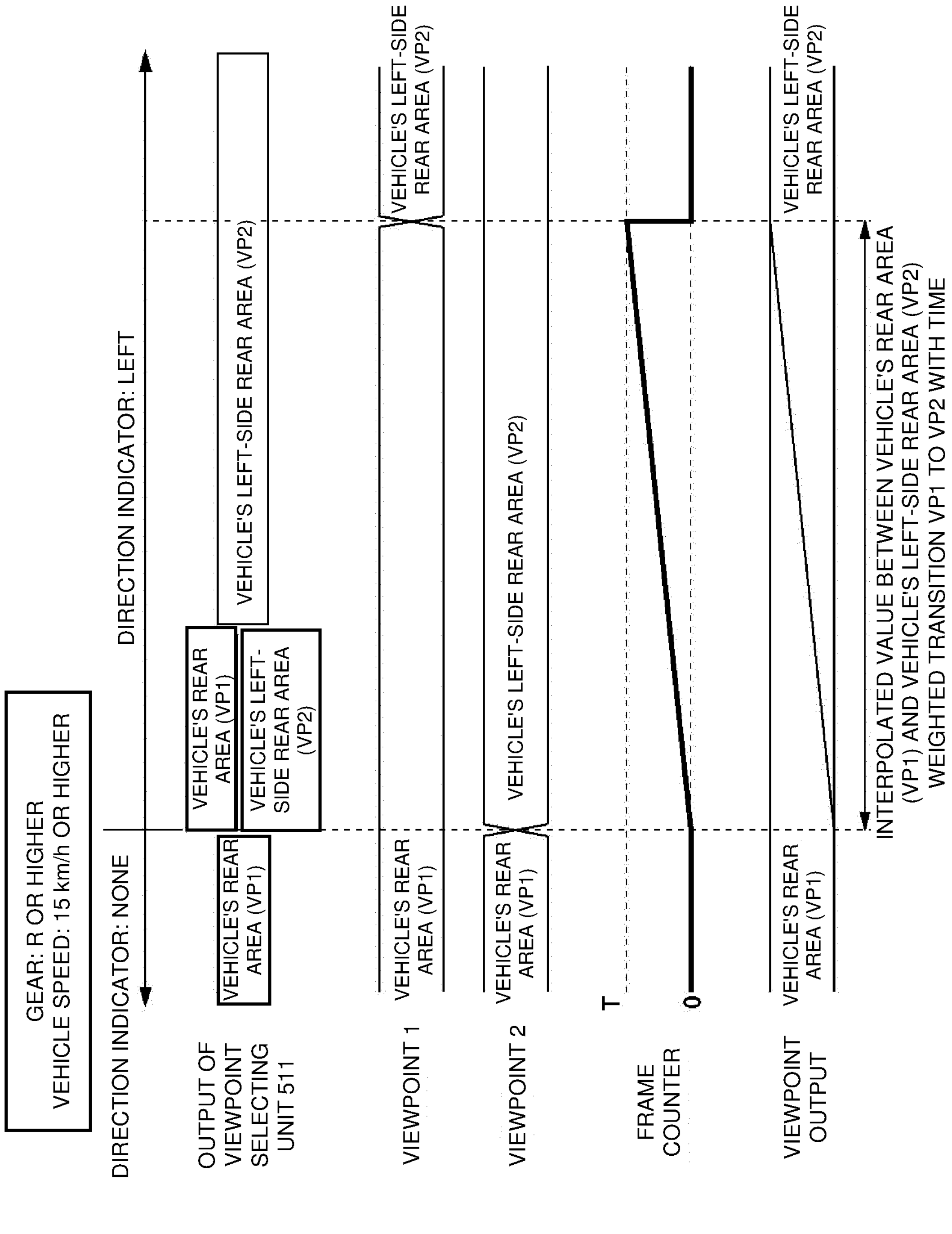
GEAR: R OR HIGHER
VEHICLE SPEED: 15 km/h OR HIGHER
DIRECTION INDICATOR: NONE
DIRECTION INDICATOR: LEFT
OUTPUT OF VIEWPOINT SELECTING UNIT 511
VEHICLE'S REAR AREA (VP1)
VEHICLE'S REAR AREA (VP1)
VEHICLE'S LEFT-SIDE REAR AREA (VP2)
VEHICLE'S LEFT-SIDE REAR AREA (VP2)
VIEWPOINT 1
VEHICLE'S REAR AREA (VP1)
VEHICLE'S LEFT-SIDE REAR AREA (VP2)
VIEWPOINT 2
VEHICLE'S REAR AREA (VP1)
VEHICLE'S LEFT-SIDE REAR AREA (VP2)
T
0
FRAME COUNTER
VIEWPOINT OUTPUT
VEHICLE'S REAR AREA (VP1)
VEHICLE'S LEFT-SIDE REAR AREA (VP2)
INTERPOLATED VALUE BETWEEN VEHICLE'S REAR AREA (VP1) AND VEHICLE'S LEFT-SIDE REAR AREA (VP2)
WEIGHTED TRANSITION VP1 TO VP2 WITH TIME

FIG.9

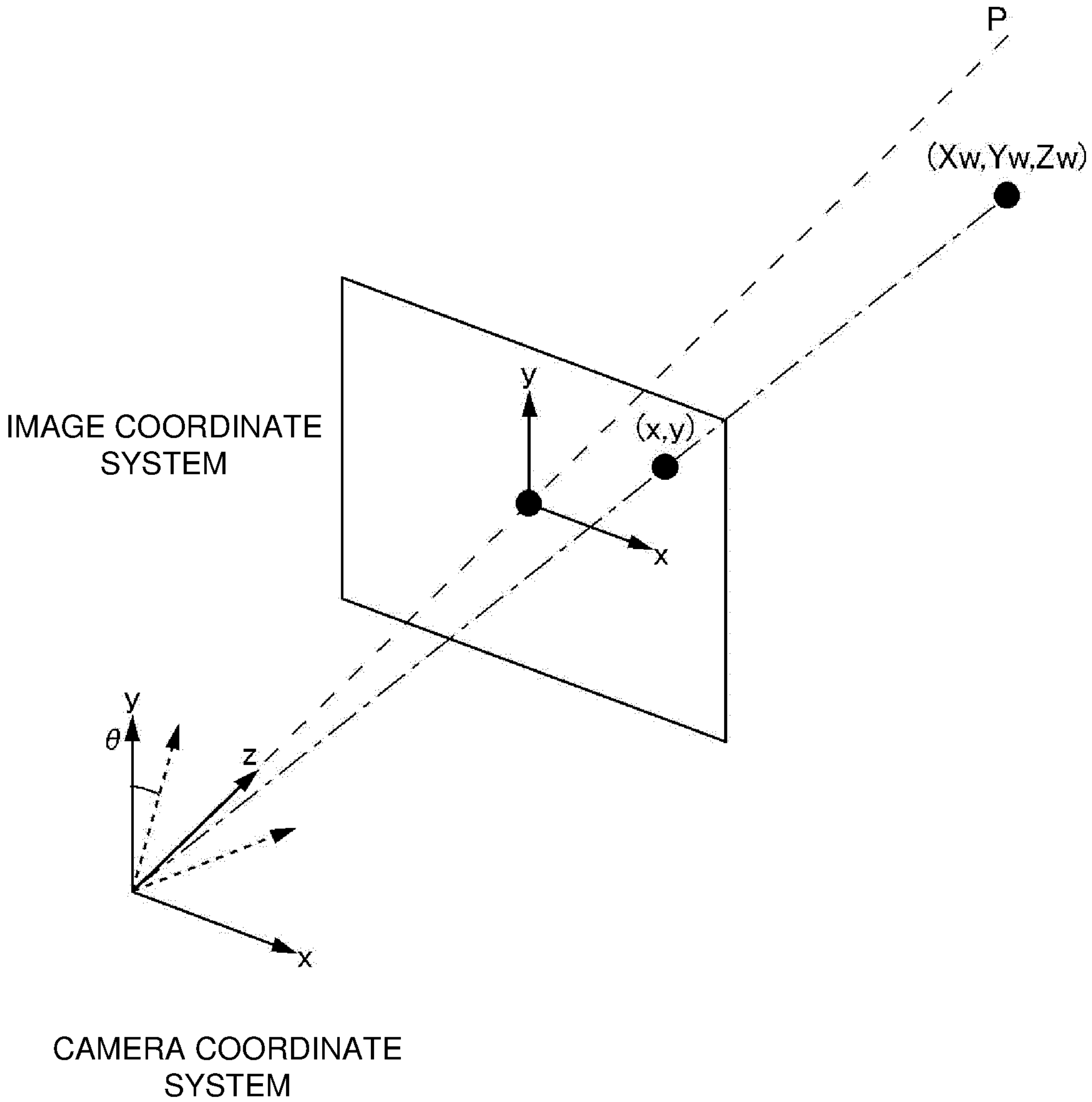
P
(Xw,Yw,Zw)
IMAGE COORDINATE SYSTEM
y
(x,y)
x
y
θ
z
x
CAMERA COORDINATE SYSTEM

FIG.10

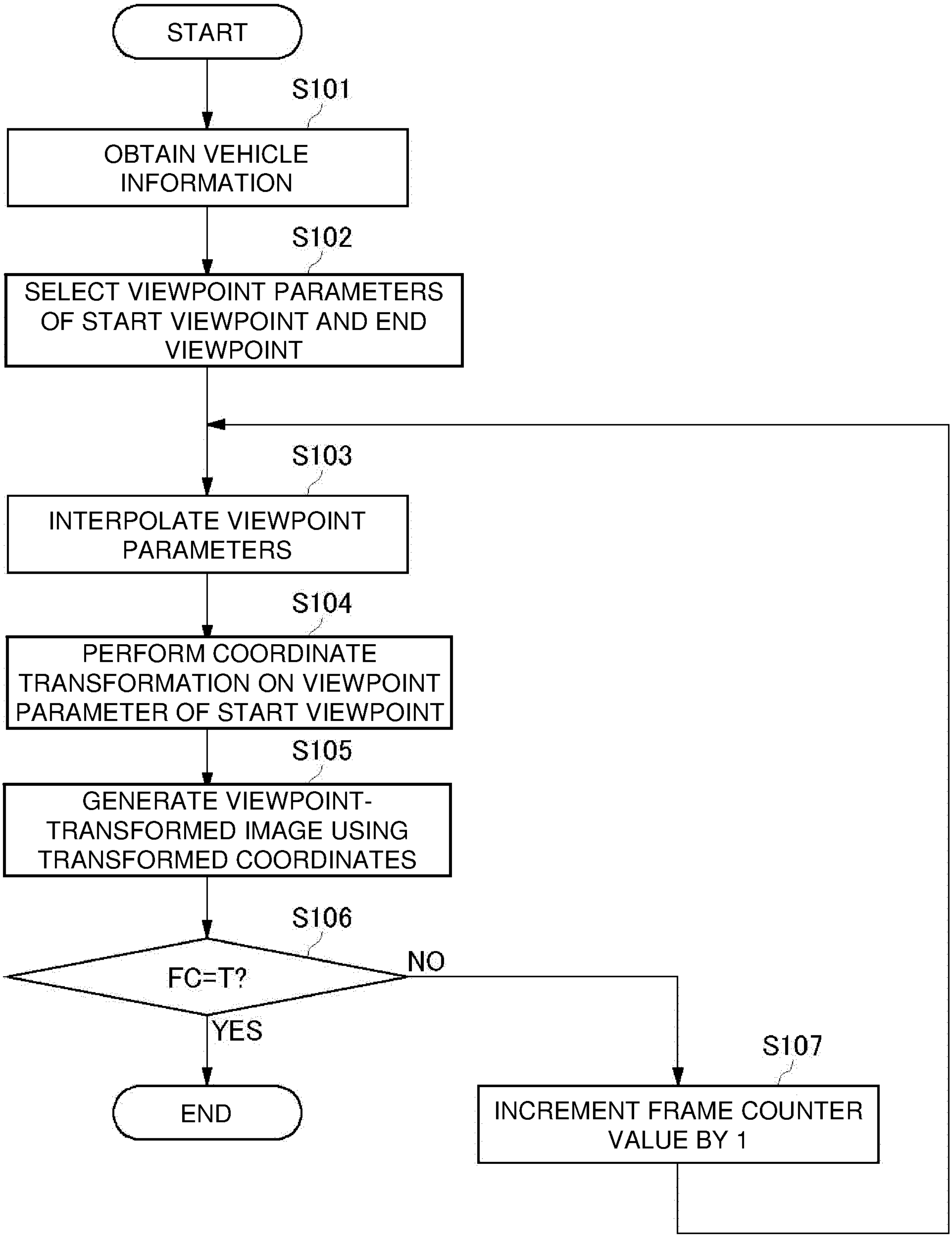
START
S101
OBTAIN VEHICLE INFORMATION
S102
SELECT VIEWPOINT PARAMETERS OF START VIEWPOINT AND END VIEWPOINT
S103
INTERPOLATE VIEWPOINT PARAMETERS
S104
PERFORM COORDINATE TRANSFORMATION ON VIEWPOINT PARAMETER OF START VIEWPOINT
S105
GENERATE VIEWPOINT-TRANSFORMED IMAGE USING TRANSFORMED COORDINATES
S106
FC=T?
NO
YES
END
S107
INCREMENT FRAME COUNTER VALUE BY 1

FIG.11

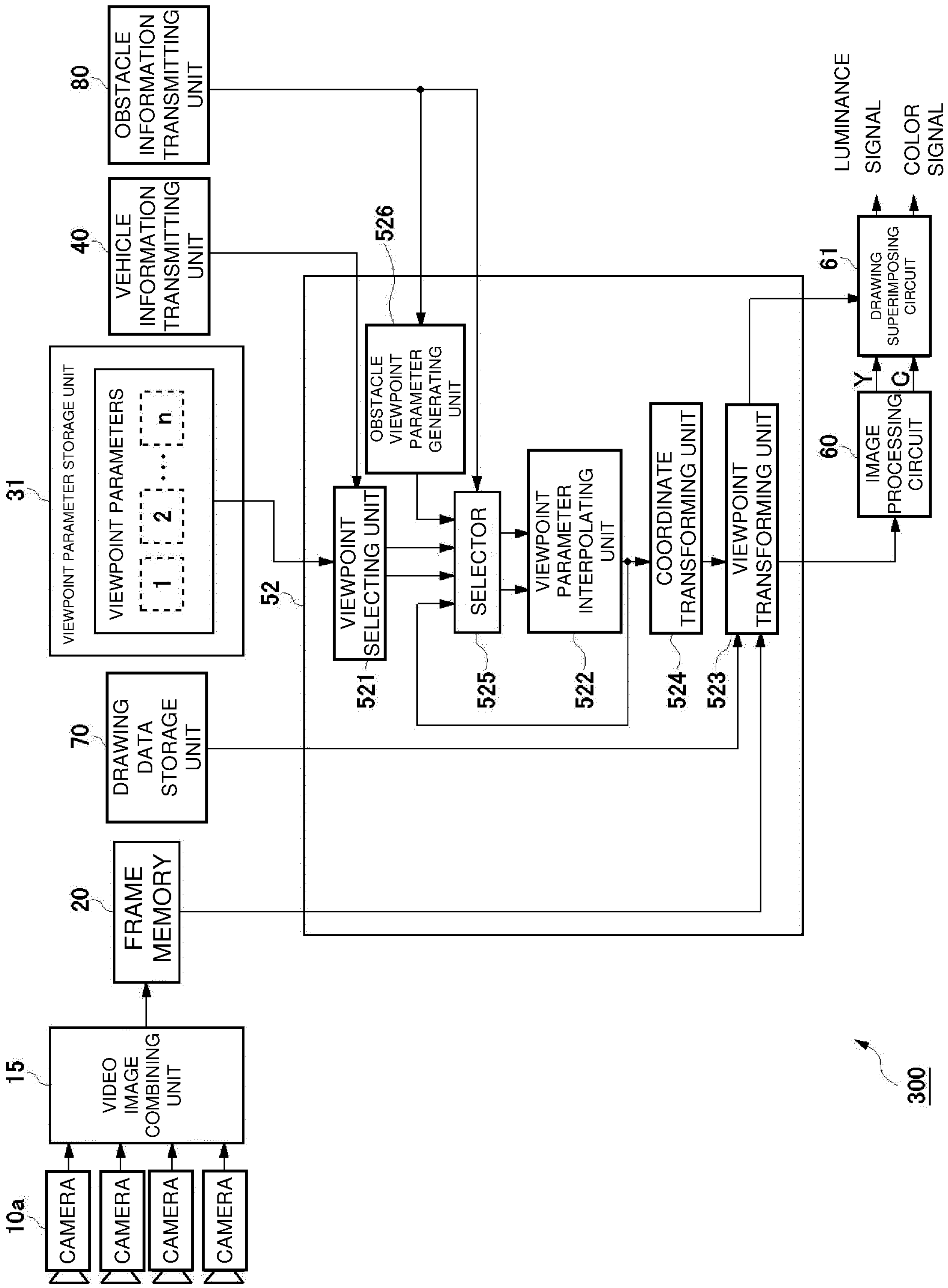
CAMERA
CAMERA
CAMERA
CAMERA
10a
VIDEO IMAGE COMBINING UNIT
15
FRAME MEMORY
20
DRAWING DATA STORAGE UNIT
70
VIEWPOINT PARAMETER STORAGE UNIT
VIEWPOINT PARAMETERS
1
2
n
31
VEHICLE INFORMATION TRANSMITTING UNIT
40
OBSTACLE INFORMATION TRANSMITTING UNIT
80
52
VIEWPOINT SELECTING UNIT
521
OBSTACLE VIEWPOINT PARAMETER GENERATING UNIT
526
SELECTOR
525
VIEWPOINT PARAMETER INTERPOLATING UNIT
522
COORDINATE TRANSFORMING UNIT
524
VIEWPOINT TRANSFORMING UNIT
523
IMAGE PROCESSING CIRCUIT
60
Y
C
DRAWING SUPERIMPOSING CIRCUIT
61
LUMINANCE SIGNAL
COLOR SIGNAL
300

FIG.12

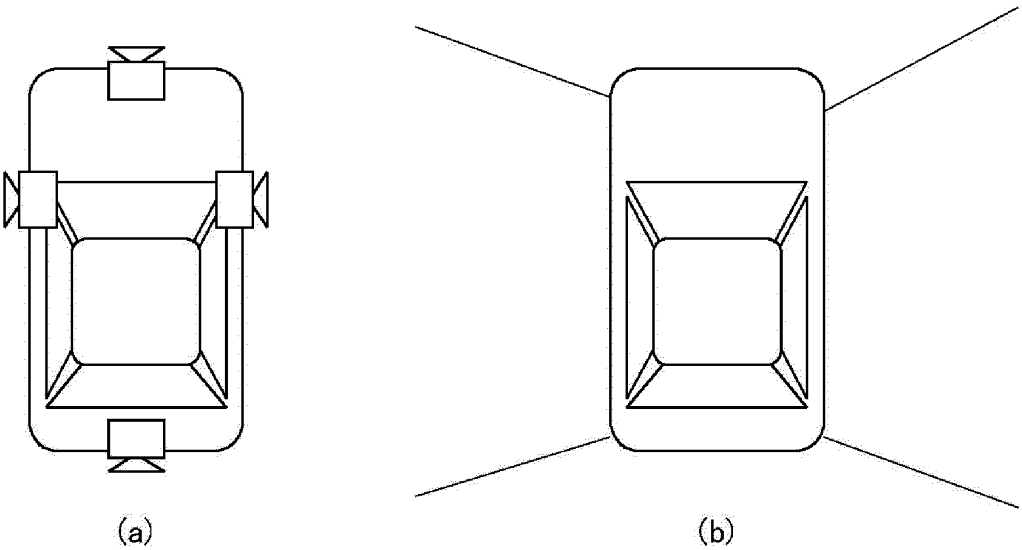


FIG.13

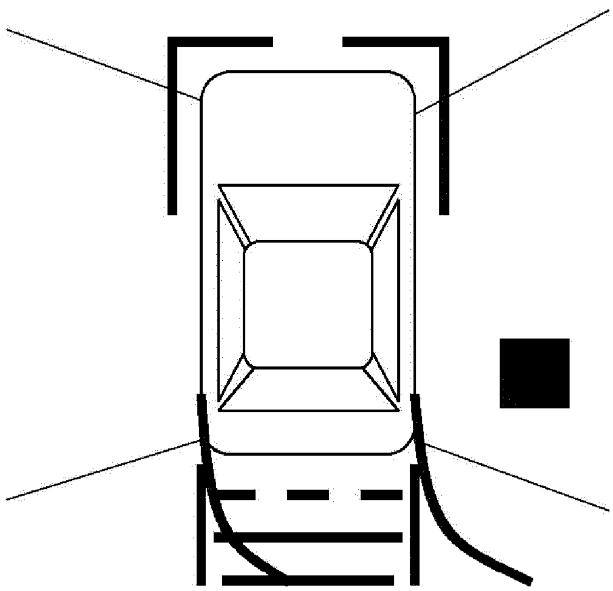

FIG.14

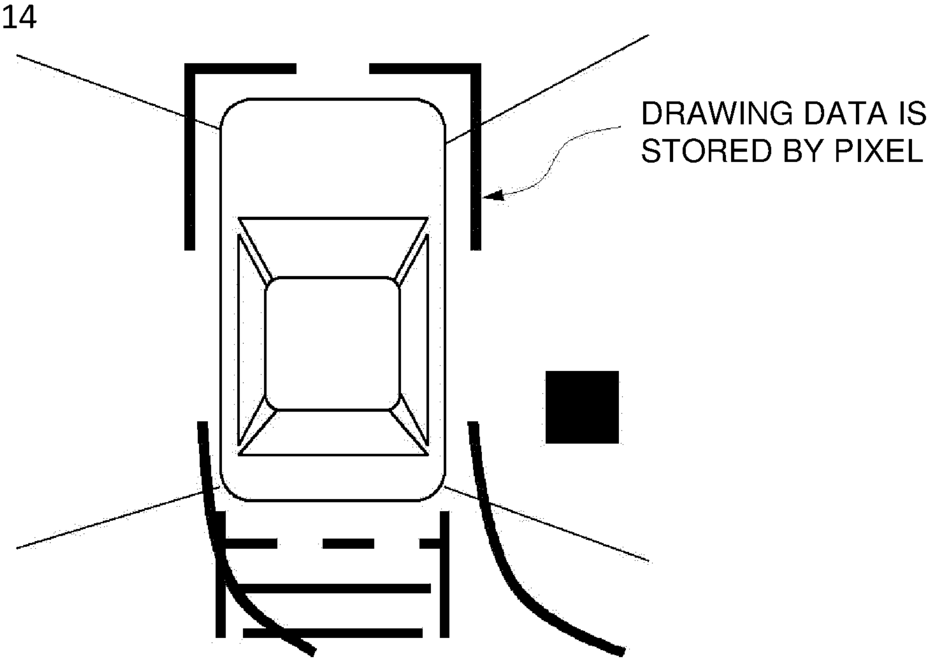
DRAWING DATA IS
STORED BY PIXEL

(a)

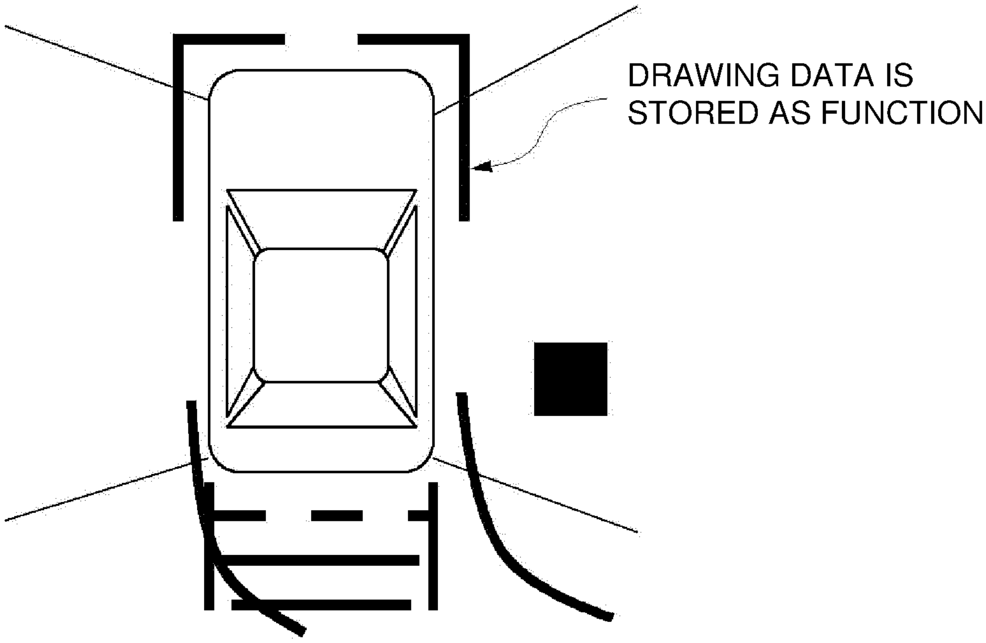
DRAWING DATA IS
STORED AS FUNCTION

(b)

FIG.15

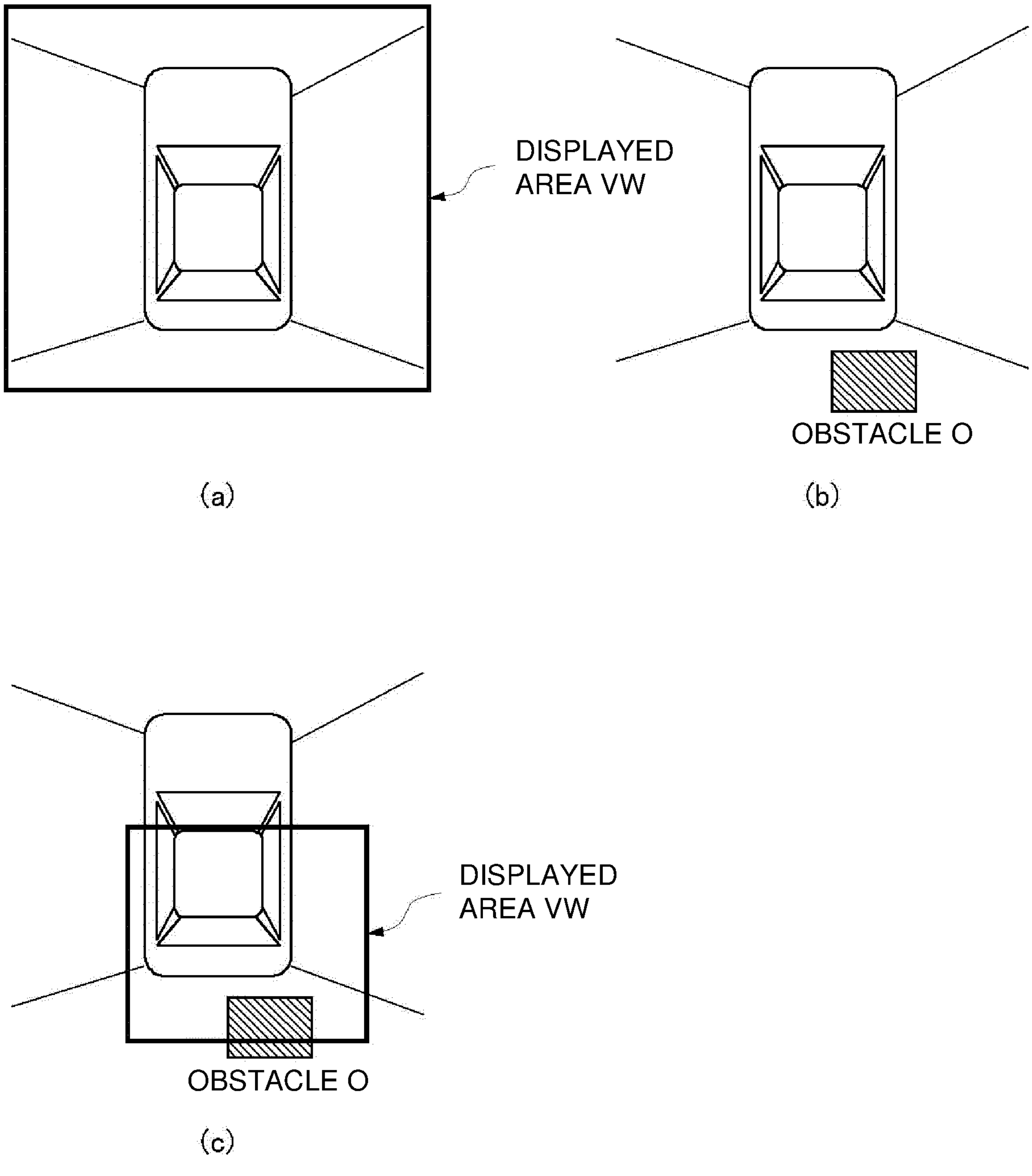
DISPLAYED
AREA VW
OBSTACLE O
(a)
(b)
DISPLAYED
AREA VW
OBSTACLE O
(c)

FIG.16

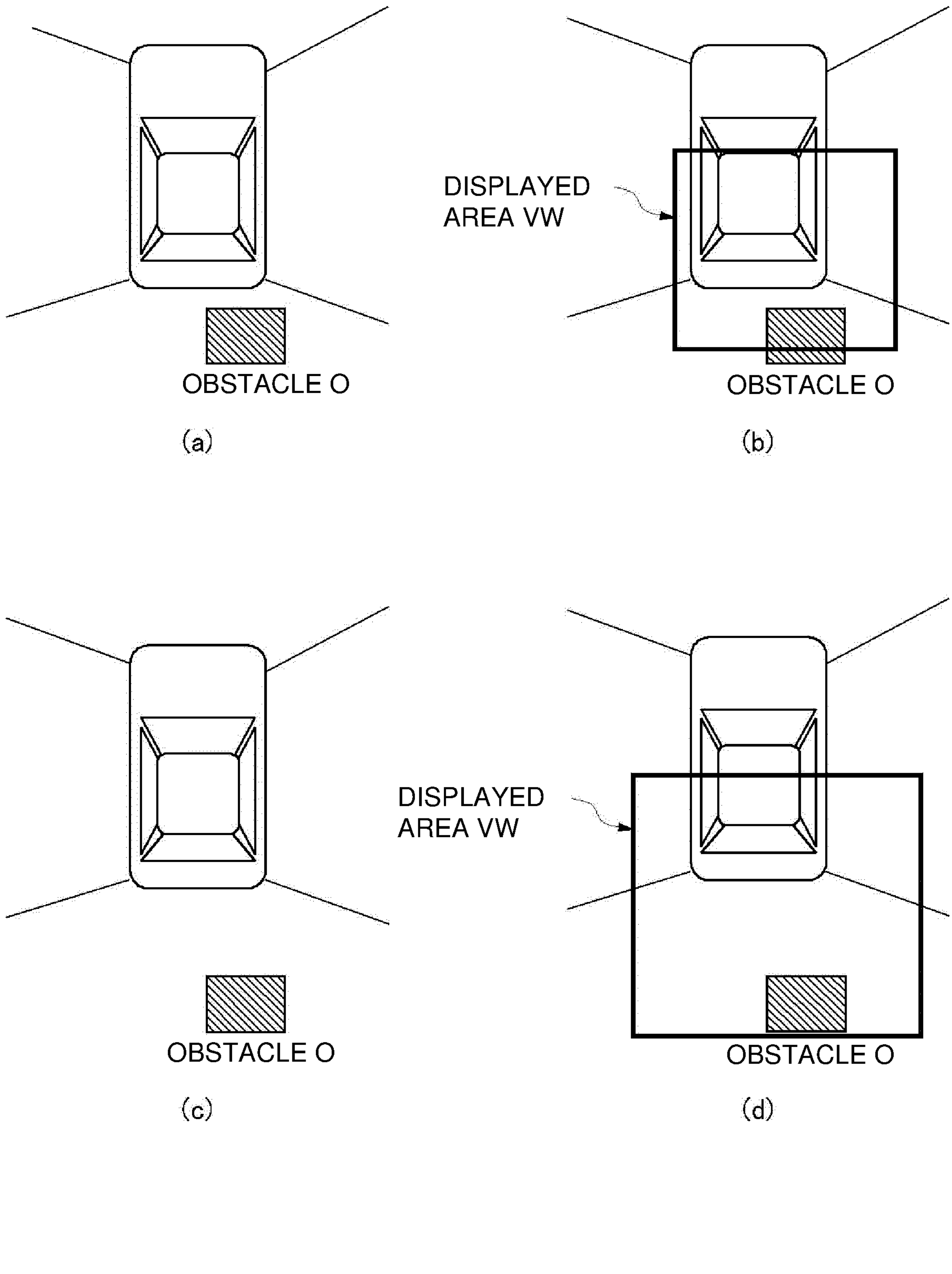
OBSTACLE O
(a)
DISPLAYED
AREA VW
OBSTACLE O
(b)
OBSTACLE O
(c)
DISPLAYED
AREA VW
OBSTACLE O
(d)

FIG.17

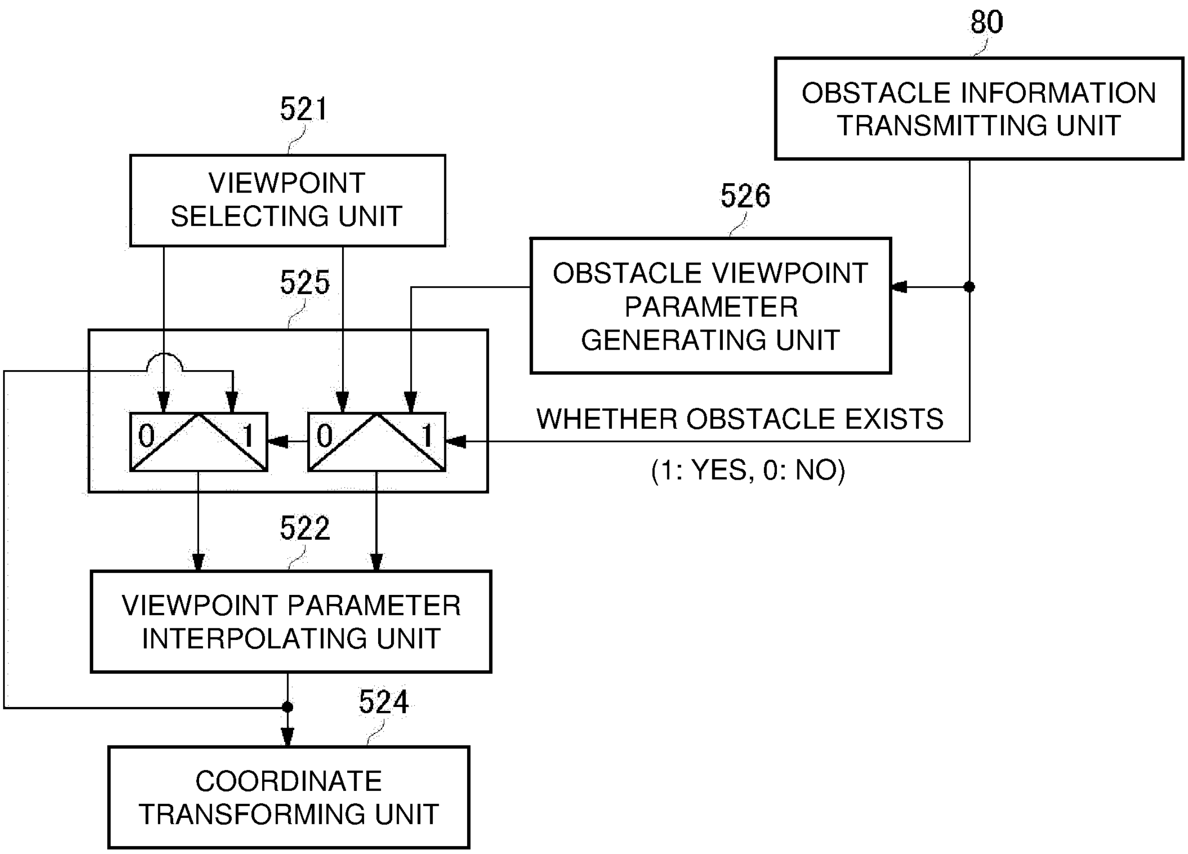
80
OBSTACLE INFORMATION TRANSMITTING UNIT
521
VIEWPOINT SELECTING UNIT
526
OBSTACLE VIEWPOINT PARAMETER GENERATING UNIT
525
0
1
0
1
WHETHER OBSTACLE EXISTS
(1: YES, 0: NO)
522
VIEWPOINT PARAMETER INTERPOLATING UNIT
524
COORDINATE TRANSFORMING UNIT

**INTERNATIONAL SEARCH REPORT**

International application No.
PCT/JP2010/001248

A. CLASSIFICATION OF SUBJECT MATTER
*H04N7/18*(2006.01)i, *B60R1/00*(2006.01)i, *G06T1/00*(2006.01)i

According to International Patent Classification (IPC) or to both national classification and IPC

B. FIELDS SEARCHED

Minimum documentation searched (classification system followed by classification symbols)
H04N7/18, B60R1/00, G06T1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 3300334 B2 (Matsushita Electric Industrial Co., Ltd.), 19 April 2002 (19.04.2002), paragraphs [0050] to [0104]; fig. 7 to 24 & US 7161616 B1 & EP 1179958 A1 & WO 2000/064175 A1 & CA 2369648 A & CN 1344470 A | 1-17 |
| Y | JP 2006-171849 A (Nissan Motor Co., Ltd.), 29 June 2006 (29.06.2006), paragraphs [0012] to [0015]; fig. 11, 12 (Family: none) | 1-17 |
| Y | JP 2009-206702 A (Fujitsu Ltd.), 10 September 2009 (10.09.2009), paragraphs [0065], [0066] (Family: none) | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 May, 2010 (25.05.10) | 01 June, 2010 (01.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/001248

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2009/144994 A1 (Fujitsu Ltd.), 03 December 2009 (03.12.2009), paragraphs [0007], [0010], [0023] to [0048]; fig. 1 to 4, 17, 18 (Family: none) | 1,2,6,7, 10-17 |
| A | JP 2004-32464 A (Clarion Co., Ltd.), 29 January 2004 (29.01.2004), paragraphs [0033] to [0057]; fig. 1 to 4 (Family: none) | 1-17 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009242191 A
- JP H11078692 B